(19) Europäisches Patentamt
European Patent Office
Office européen des brevets

(11) EP 3 389 130 B1

(12) EUROPEAN PATENT SPECIFICATION

(45) Date of publication and mention of the grant of the patent:
**04.03.2020 Bulletin 2020/10**

(21) Application number: **16873034.9**

(22) Date of filing: **07.12.2016**

(51) Int Cl.:
***H01M 10/12*** *(2006.01)* ***H01M 2/18*** *(2006.01)*
***H01M 4/14*** *(2006.01)* ***H01M 4/62*** *(2006.01)*
***H01M 10/06*** *(2006.01)* ***H01M 10/08*** *(2006.01)*
***H01M 2/16*** *(2006.01)* ***H01M 4/66*** *(2006.01)*
***H01M 4/68*** *(2006.01)* ***H01M 4/73*** *(2006.01)*
*H01M 4/02* *(2006.01)*

(86) International application number:
**PCT/JP2016/086431**

(87) International publication number:
**WO 2017/099141 (15.06.2017 Gazette 2017/24)**

# (54) LEAD STORAGE BATTERY

BLEIAKKUMULATOR

ACCUMULATEUR AU PLOMB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 PCT/JP2015/084847**

(43) Date of publication of application:
**17.10.2018 Bulletin 2018/42**

(73) Proprietor: **Hitachi Chemical Co., Ltd.**
**Chiyoda-ku**
**Tokyo 100-6606 (JP)**

(72) Inventors:
- **ARAKI Yuji**
  **Tokyo 100-6606 (JP)**
- **HIRANO Takayuki**
  **Tokyo 100-6606 (JP)**
- **OKOSHI Tetsuro**
  **Tokyo 100-6606 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 280 443**
**WO-A1-2009/142220**
**WO-A1-2011/142072**
**WO-A1-2012/043331**
**WO-A1-2012/043331**
**WO-A1-2012/157311**
**WO-A1-2015/163287**
**WO-A1-2015/163287**
**WO-A1-2016/114315**
**WO-A1-2016/204049**
**JP-A- 2007 227 118**
**JP-A- 2014 157 703**
**JP-A- 2015 225 710**
**JP-B1- 5 587 523**
**US-A1- 2012 070 714**
**US-A1- 2013 099 749**
**US-A1- 2015 200 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 389 130 B1

## Description

### Technical field

The present disclosure relates to a lead storage battery.

### Background Art

The lead storage battery is excellent in reliability and is inexpensive, and accordingly is widely used in the applications such as industrial products and consumer products. In particular, there is a lot of demands for automobiles (so-called, battery). In recent years, the development of an idling stop system vehicle (which will be referred to as "ISS vehicle" hereinafter), which stops the engine when the vehicle temporarily stops, and restarts when the vehicle starts, has been accelerated, as a measure of environmental protection and a fuel consumption improvement.

The lead storage battery mounted on the ISS vehicle is mainly used in a state in which the lead storage battery is not fully charged, in other words, in a partial state of charge (PSOC), due to the following circumstances peculiar to the ISS vehicle. Specifically, in the ISS vehicle, the start and stop of the engine are frequently repeated. When the engine starts, a discharge of a large current is necessary, and accordingly the number of times thereof inevitably increases. In addition to the above circumstance, when the ISS vehicle stops, an alternator using the engine as a power source also stops, and accordingly the vehicle cannot charge its lead storage battery. Even though the vehicle stops, the electrical equipment (for instance, air conditioner) needs electric power supply, and accordingly the discharge load increases.

The use of the lead storage battery in the PSOC state leads to a problem of "ear thinning phenomenon" which has not occurred in such a situation that the lead storage battery is used in a conventional fully charged state. This is such a phenomenon that the thickness of the ear portion decreases with the passage of time, due to such a cause that the ear portion (current collecting portion) of a negative electrode current collector is used for a discharge reaction, and the like. When the ear thinning phenomenon occurs, the resistance of the ear portion increases, and thereby a performance (for instance, charge-discharge characteristics and cycle life) of the lead storage battery decreases. When the ear thinning phenomenon further progresses, the ear portion ruptures, and such a situation suddenly happens that an output cannot be obtained from the lead storage battery. Such a lifetime mode is also referred to as "sudden end of the lifetime", and is a situation to be particularly avoided in an automotive battery.

Patent Literature 1 discloses a technology of providing a lead-tin alloy layer at the ear portion of the negative electrode grid body in the lead storage battery which is used in the PSOC state, and making a negative electrode active material contain a predetermined amount of carbon, from the viewpoint of suppressing the ear thinning phenomenon of the negative electrode.

### Citation List

### Patent Literature

Patent Literature 1: International Publication No. WO 2010/032782.
Patent Literature 2: International Publication No. WO 2012/043331.
Patent Literature 3: European Publication No. EP 2280443.

### Summary of Invention

### Technical Problem

The technology of Patent Literature 1 is considered to be capable of suppressing the ear thinning of the negative electrode current collector, and accordingly delaying a sudden end of the lifetime due to the rupture of the ear portion. However, the lead storage batteries which are used in the ISS vehicles, the power generation control vehicles and the like are required to have a longer life. From such a viewpoint, the technology of Patent Literature 1 has still had a room for improvement. Patent Literature 2 and Patent Literature 3 disclose lead-acid batteries comprising a positive electrode, a negative electrode and a separator, the electrodes comprising an active material filled portion supported on a grid, and an ear portion coated with a Sn alloy.

An object of the present disclosure is to provide a lead storage battery which can be used for a sufficiently long period of time even if the lead storage battery is used mainly in the partial state of charge (PSOC state).

**Solution to Problem**

A lead storage battery according to one aspect of the present disclosure comprises: a battery case having a cell chamber; a polar plate group provided in the cell chamber and having a separator, a positive electrode plate and a negative electrode plate, the positive electrode plate and the negative electrode plate being alternately stacked with the separator disposed therebetween; and an electrolytic solution accommodated in the cell chamber. The positive electrode plate has a positive electrode material filled portion comprised of a positive electrode material, a positive electrode current collector supporting the positive electrode material filled portion, and a positive electrode ear portion provided on an upper peripheral portion of the current collector. The negative electrode plate has a negative electrode material filled portion comprised of a negative electrode material, a negative electrode current collector supporting the negative electrode material filled portion, and a negative electrode ear portion provided on an upper peripheral portion of the current collector. The negative electrode ear portion has a surface layer containing Sn in an amount of 50 parts by mass or more, based on 100 parts by mass of the surface layer. In the above described lead storage battery, when a total surface area of the positive electrode material filled portion and the negative electrode material filled portion is represented by S1 and an apparent total volume of the positive electrode material filled portion and the negative electrode material filled portion is represented by VI, S1/V1 is 8.9 $cm^{-1}$ or larger.

The lead storage battery which satisfies the above described conditions can be used for a sufficiently long period of time even if the lead storage battery is used mainly in the PSOC state. In particular, by having the negative electrode ear portion which has the surface layer containing Sn, the lead storage battery can sufficiently suppress such a phenomenon that the thickness of the negative electrode ear portion becomes thin with time (ear thinning). Accordingly, the lead storage battery can sufficiently prevent an occurrence of such a situation that the ear portion ruptures and thereby an output suddenly cannot be obtained from the lead storage battery. Incidentally, examples of indicators of a life performance of the lead storage battery that is used mainly in the PSOC state include "ISS cycle characteristics", and the ISS cycle characteristics can be evaluated by a cycle test which simulates the way the lead storage battery is used in the ISS vehicle.

Incidentally, it is known that when the lead storage battery is overcharged, the electrolysis occurs by which water in the electrolytic solution is decomposed into oxygen gas and hydrogen gas. When the electrolysis occurs, gases (oxygen gas and hydrogen gas) generated by the electrolysis are discharged to the outside of the system, and accordingly a water content in the electrolytic solution decreases. As a result, a concentration of sulfuric acid in the electrolytic solution increases, and a reduction of the capacity progresses due to the corrosion deterioration of the positive electrode plate, or the like. In addition, if the polar plate is exposed from the electrolytic solution as a liquid level of the electrolytic solution lowers, such problems occur that the discharge capacity suddenly decreases, and that the connecting portion between the negative electrode plate and the strap or the strap itself corrodes. Even if the electrolytic solution has decreased, the problems do not occur as long as the maintenance of replenishing the battery case with water is performed. However, it is required to suppress the decrease of water in the electrolytic solution, from the viewpoint of decreasing the frequency of the maintenance. In addition, it has become clear by the knowledge of the present inventors that also in the lead storage battery used under the PSOC, the electrolysis of the electrolytic solution occurs, and the water content in the electrolytic solution decreases. This cause is not necessarily clear, but in regard to the cause, the present inventors assume that it is a main cause that a portion locally exists at which the active material becomes a fully charged state in the electrode even when the lead storage battery is under PSOC, and that the electrolysis of the electrolytic solution occurs in the portion.

In the case where at least one part of the surface of a current collecting portion 32 of the negative electrode substantially contains Sn (tin), the lead storage battery can effectively suppress the above described reduction of the electrolytic solution. Specifically, the lead storage battery according to the present invention is excellent also in a liquid reduction performance (performance to suppress reduction of electrolytic solution). It is not clear why the lead storage battery can more sufficiently suppress the reduction of the electrolytic solution due to the surface of the current collecting portion 32 of the negative electrode, at least a part of which substantially contains Sn (tin), but the present inventors guess the cause in the following way. Specifically, the exposure of the lead on the surface of the current collecting portion 32 of the negative electrode becomes little, thereby the surface of the current collecting portion 32 of the negative electrode resists forming a local cell, and the electrolysis of the electrolytic solution by an action of the local cell is suppressed. It is assumed that as a result, the reduction of the electrolytic solution can be more sufficiently suppressed.

From the viewpoint of further enhancing the ISS cycle characteristics of the lead storage battery, the lead storage battery may adopt one or a plurality of structures selected from the following aspects, in addition to such a structure that the negative electrode ear portion has the surface layer containing Sn.

(1) A ratio of a mass p1 of the positive electrode material to a mass n1 of the negative electrode material, p1/n1, is 1.15 or larger. This contributes to the enhancement of the ISS cycle characteristics.

(2) The negative electrode material further contains a resin having a sulfone group and/or a sulfonate group. This

contributes to the enhancement of the ISS cycle characteristics. The resin having a sulfone group and/or a sulfonate group may be a bisphenol-based resin. The bisphenol-based resin may be a condensate of bisphenol, aminobenzenesulfonic acid and formaldehyde.

(3) The electrolytic solution contains aluminum ions. This contributes also to the enhancement of charge acceptability and a liquid reduction performance (performance of suppressing reduction of electrolytic solution), in addition to the enhancement of the ISS cycle characteristics. A concentration of the aluminum ions may be 0.02 to 0.14 mol/L.

(4) The polar plate group has a nonwoven fabric between the negative electrode plate and the separator, and the negative electrode plate and the nonwoven fabric come into contact with each other. This contributes also to the enhancement of the liquid reduction performance, in addition to the enhancement of the ISS cycle characteristics. The nonwoven fabric may be a nonwoven fabric consisting of at least one fiber selected from the group consisting of glass fiber, polyolefin-based fiber, and fiber made of pulp.

(5) A specific surface area of the positive electrode material is 4 $m^2/g$ or larger. This contributes also to the enhancement of the charge acceptability, in addition to the enhancement of the ISS cycle characteristics.

(6) A specific gravity of the electrolytic solution is 1.25 to 1.29. This contributes also to the enhancement of charge acceptability, in addition to the enhancement of the ISS cycle characteristics. Furthermore, this brings about an effect of suppressing a permeation short circuit and freeze, and an effect of enhancing discharge characteristics.

(7) When a thickness of the polar plate group is represented by D1 and an inner dimension of a cell chamber in a stack direction of the polar plate group is represented by A1, D1/A1 is 0.85 or larger.

(8) The surface layer consists of Sn. This contributes to the enhancement of the ISS cycle characteristics.

(9) A specific surface area of the negative electrode material is 0.4 $m^2/g$ or larger. This contributes also to the enhancement of the discharge characteristics, in addition to the enhancement of the ISS cycle characteristics.

(9) A content of a positive electrode active material contained in the positive electrode material is 95 mass% or more with respect to the mass p1 of the positive electrode material, and a content of a negative electrode active material contained in the negative electrode material is 93 mass% or more with respect to the mass n1 of the negative electrode material. This contributes also to the enhancement of a low-temperature high-rate discharge performance and the charge acceptability, in addition to the enhancement of the ISS cycle characteristics.

From the viewpoint of further enhancing the charge acceptability of the lead storage battery, the negative electrode material may further contain a carbonaceous material. The carbonaceous material may be Ketjen black or scaly graphite. In addition, the separator may have a rib and a base portion supporting the rib, a thickness of the base portion is 0.3 mm or smaller, and a height of the rib may be 0.6 mm or smaller.

## Advantageous Effects of Invention

According to the present disclosure, a lead storage battery is provided which can be used for a sufficiently long period of time even if the lead storage battery is used mainly in a partial state of charge (PSOC state). In addition, according to the present disclosure, a lead storage battery having an excellent liquid reduction performance is provided.

## Brief Description of the Drawings

[Figure 1] Figure 1 is a perspective view showing a lead storage battery according to an embodiment.

[Figure 2] Figure 2 is a view showing an internal structure of the lead storage battery shown in Figure 1.

[Figure 3] Figure 3 is a perspective view showing one example of a polar plate group.

[Figure 4] Figure 4 is a front view showing an electrode plate (positive electrode plate or negative electrode plate).

[Figure 5] Figure 5(a) is a cross-sectional view taken along the line V-V of Figure 4, and shows the positive electrode plate; and Figure 5(b) is a cross-sectional view taken along the line V-V of Figure 4, and shows the negative electrode plate.

[Figure 6] Figure 6(a) and Figure 6(b) are front views each showing one example of a current collector (positive electrode current collector or negative electrode current collector).

[Figure 7] Figure 7 is a view showing a bag-like separator and an electrode to be accommodated in the bag-like separator.

[Figure 8] Figure 8(a) is a view showing one example of the separator; and Figure 8(b) is a cross-sectional view taken along the line Ib-Ib of Figure 8(a).

[Figure 9] Figure 9 is a cross-sectional view showing one example of an arrangement of the separator and the electrode plates.

[Figure 10] Figure 10 is a perspective view showing one example of a battery case.

[Figure 11] Figure 11 is a cross-sectional view taken along the line XI-XI in Figure 10.

**Description of Embodiments**

In the present specification, a term "layer" includes a structure of a shape formed on the whole area when observed as a plan view, and in addition, also a structure of a shape formed in one part. In the present specification, a numerical range indicated by using "to" indicates a range which includes numerical values described before and after "to" as the minimum value and the maximum value, respectively. In the numerical ranges which are described stepwise in the present specification, the upper limit value or the lower limit value of the numerical range of a certain stage may be replaced with the upper limit value or the lower limit value of the numerical range of another stage. In the numerical ranges which are described in the present specification, the upper limit value or the lower limit value of the numerical value range may be replaced with the value shown in the examples. "A or B" may include either one of A and B, and may also include both of A and B. Materials which are exemplified in the present specification can be used each singly or in combinations of two or more, unless otherwise specified. In the present specification, when a plurality of substances corresponding to each component exist in the composition, the content of each component in the composition means the total amount of the plurality of substances that exist in the composition, unless otherwise specified. The specific gravity varies depending on a temperature, and accordingly is defined as a specific gravity which is converted to that at 20°C, in the present specification.

An embodiment of a lead storage battery according to the present disclosure will be described below in detail with reference to the drawings. Incidentally, in all the drawings, the same or corresponding portions shall be denoted by the same reference numerals.

<Lead storage battery>

The lead storage battery according to the present embodiment comprises: a battery case having a cell chamber; a polar plate group provided in the cell chamber and having a separator, a positive electrode plate and a negative electrode plate, the positive electrode plate and the negative electrode plate being alternately stacked with the separator disposed therebetween; and an electrolytic solution accommodated in the cell chamber. The positive electrode plate and the negative electrode plate respectively have: electrode material filled portions comprised of electrode materials (positive electrode material and negative electrode material); current collectors supporting the electrode material filled portions; and ear portions provided on upper peripheral portions of the current collectors. The electrode material contains, for instance, an electrode active material. The ear portion is provided, for instance, in such a way as to protrude upward from the upper peripheral portion of the current collector. The ear portion of the negative electrode has a surface layer containing Sn. When a total surface area of the electrode material filled portion is represented by S1 and an apparent total volume of the electrode material filled portion is represented by VI, S1/V1 is 8.9 $cm^{-1}$ or larger.

This lead storage battery can be applied to various types of lead storage batteries, in other words, a liquid type lead storage battery, a control valve type lead storage battery, a closed type lead storage battery and the like. Among the above lead storage batteries, the liquid type lead storage battery is preferable, from the viewpoints of the production cost and the like. Incidentally, in the present embodiment, the electrode material means an electrode material after the formation (for instance, in fully charged state). In the stage of being unformed, a material corresponding to the electrode material contains a substance to become the electrode material by the formation.

Figure 1 is a perspective view of the lead storage battery (liquid type lead storage battery) according to the present embodiment; and Figure 2 is a view showing an internal structure of the lead storage battery 1. As is shown in these figures, the lead storage battery 1 comprises: a battery case 2 of which the upper face is opened and in which a plurality of polar plate groups 11 are stored; and a lid 3 which closes the opening of the battery case 2. The lid 3 is formed from polypropylene, and comprises, for instance, a positive electrode terminal 4, a negative electrode terminal 5, and a liquid port plug 6 which blocks a liquid injection port provided in the lid 3. An electrolytic solution (not shown) is accommodated in the battery case 2.

<Polar plate group>

The polar plate group has separators, positive electrode plates and negative electrode plates, and the positive electrode plates and the negative electrode plates are alternately stacked with respective separators disposed therebetween. As shown in Figures 2 and 3, the polar plate group 11 comprises, for instance: positive electrode plates 12; negative electrode plates 13; a bag-like separator 14; a positive electrode side strap 15; a negative electrode side strap 16; and a connecting portion 17 between the cells or a pole pillar 18.

Figure 4 is a front view showing an electrode plate (positive electrode plate or negative electrode plate). Figure 5 is a cross-sectional view taken along the line V-V of Figure 4; Figure 5(a) shows a cross section of the positive electrode

plate; and Figure 5(b) shows a cross section of the negative electrode plate. Figure 6 is a front view showing a current collector (positive electrode current collector or negative electrode current collector). In Figures 4 and 6, the reference numerals in parentheses denote structures of the negative electrode plate.

The number of positive electrode plates 12 and negative electrode plates 13 in the polar plate group 11 may be, for instance, 8 negative electrode plates with respect to 7 positive electrode plates, 8 negative electrode plates with respect to 8 positive electrode plates, and 9 negative electrode plates with respect to 8 positive electrode plates. As the number of the positive electrode plates and the negative electrode plates increases, the ISS cycle characteristics tend to further enhance.

(Positive electrode plate)

As shown in Figures 4, 5(a) and 6, the positive electrode plate 12 comprises a positive electrode current collector 21, and a positive electrode material 23 which is filled in the positive electrode current collector 21; and the positive electrode material 23 constitutes a positive electrode material filled portion 24. The positive electrode current collector 21 has a current collecting portion 22 of the positive electrode (positive electrode ear portion).

In the positive electrode plate 12, a portion filled with the positive electrode material 23 represents a positive electrode material filled portion 24 (portion hatched in sandy soil shape in Figure 4). Incidentally, the positive electrode material filled portion 24 is formed on the front and back faces of the positive electrode plate 12. Usually, the positive electrode material 23 is filled in the whole area of the positive electrode current collector 21 (whole area of positive electrode material supporting portion which will be described later), but the positive electrode material 23 does not need to be necessarily filled in the whole area of the positive electrode current collector 21. Specifically, there may be a portion in which the positive electrode material 23 is not filled in a part of the positive electrode current collector 21. In this case, only the portion out of the positive electrode current collector 21, in which the positive electrode material 23 is filled, represents the positive electrode material filled portion 24, and a portion out of the positive electrode current collector 21, in which the positive electrode material 23 is not filled, is excluded from the positive electrode material filled portion 24.

(Positive electrode current collector)

The positive electrode current collector 21 comprises: a positive electrode material supporting portion 21a; an upper side frame portion (upper peripheral portion) 21b which is formed into a belt shape on an upper side of the positive electrode material supporting portion 21a; and a current collecting portion 22 of the positive electrode (positive electrode ear portion), which is provided in the upper side frame portion 21b. The current collecting portion 22 of the positive electrode is provided, for instance, in such a way as to partially protrude upward from the upper side frame portion 21b. The contour of the positive electrode material supporting portion 21a is, for instance, a rectangle (oblong or square), and is formed in a grid shape. The positive electrode material supporting portion 21a may have such a shape that the lower corner portion is cut off, as is shown in Figure 6(b). The positive electrode current collector 21 constitutes an electrically-conducting path of an electric current to be passed from the positive electrode material 23.

A width W2 of the positive electrode current collector 21 is, for instance, 10.0 to 16.0 cm. A height H2 of the positive electrode current collector 21 is, for instance, 10.0 to 12.0 cm. A thickness of the positive electrode current collector 21 is, for instance, 0.6 to 1.1 mm. Incidentally, when the positive electrode material supporting portion 21a has such a shape that the lower corner portion is cut off, W2 and H2 are calculated assuming that the lower corner portion exists (see Figure 6(b)).

Examples of a composition of the positive electrode current collector 21 include a lead-calcium-tin alloy, a lead-calcium alloy and a lead-antimony alloy. The positive electrode current collector 21 can be obtained by forming these lead alloys into a grid shape by a gravity casting method, an expanding method, a stamping method or the like. Incidentally, the positive electrode current collector 21 shown in Figure 6 is an expanded grid body.

(Positive electrode material)

[Positive electrode active material]

The positive electrode material 23 contains, for instance, a positive electrode active material. The positive electrode material 23 is obtained, for instance, by operations of: aging and drying a paste of the positive electrode material containing a substance to become a positive electrode active material (raw material of positive electrode active material) by formation; and forming the resultant paste. Examples of the positive electrode active material include $\beta$-lead dioxide ($\beta$-$PbO_2$) and $\alpha$- lead dioxide ($\alpha$-$PbO_2$). Among these lead dioxides, one may be contained in the positive electrode material 23, or both may be contained in the positive electrode material 23. The raw material of the positive electrode active material is not limited in particular, and examples of the raw materials include lead powder. Examples

of the lead powder include, for instance, lead powder (mixture of main component PbO powder and scaly metallic lead, in ball mill type lead powder producing machine) which is produced by the ball mill type lead powder producing machine or a Burton-pot type lead powder producing machine. Red lead ($Pb_3O_4$) may be used as the raw material of the positive electrode active material. The paste of the positive electrode material may contain, for instance, tribasic lead sulfate (raw material of positive electrode active material) as a main component.

The content of the positive electrode active material (based on the total mass of positive electrode material 23) is, for instance, 95 mass% or more, and may be 97 mass% or more, or 99 mass% or more, from the viewpoints that the lead storage battery is excellent in low-temperature high-rate discharge performance and charge acceptability and is further excellent in the ISS cycle characteristics. The upper limit of the content of the positive electrode active material may be, for instance, 100 mass%. Specifically, the positive electrode material 23 may substantially consist of the positive electrode active material. Incidentally, the content of the positive electrode active material described here means the amount of the positive electrode active material (which has been formed) contained in the positive electrode material 23 (which has been formed).

[Positive electrode additive]

The positive electrode material 23 may further contain an additive. Examples of the additive include a carbonaceous material (carbonaceous electroconductive material), and short fiber for reinforcement. Examples of the carbonaceous materials include carbon black and graphite. Examples of the carbon black include Furnace black (Ketjen black, and the like), Channel black, Acetylene black and Thermal black. Examples of the short fibers for reinforcement include acrylic fiber, polyethylene fiber, polypropylene fiber, polyethylene terephthalate fiber and carbon fiber. Incidentally, the carbon fiber described here as the short fiber for reinforcement may be added to the positive electrode material as the carbonaceous material (carbonaceous electroconductive material).

[Physical property of positive electrode material]

The lower limit of the specific surface area of the positive electrode material 23 is, for instance, 3 $m^2/g$, and may be 4 $m^2/g$ or 5 $m^2/g$, from the viewpoint that the lead storage battery is excellent in charge acceptability and is further excellent in the ISS cycle characteristics. The upper limit of the specific surface area of the positive electrode material 23 is not limited in particular, but is, for instance, 15 $m^2/g$, and may be 12 $m^2/g$ or 7 $m^2/g$, from a practical viewpoint and the viewpoint that a utilization factor is excellent. From these viewpoints, the specific surface area of the positive electrode material 23 is, for instance, 3 to 15 $m^2/g$, and may also be 4 to 12 $m^2/g$, or 5 to 7 $m^2/g$. Incidentally, the specific surface area of the positive electrode material 23 described here means a specific surface area of the positive electrode material 23 (which has been formed). The specific surface area of the positive electrode material 23 can be adjusted, for instance, by a method of adjusting an amount of sulfuric acid and water to be added when the paste of the positive electrode material is produced, a method of refining a raw material of the active material at such a stage that the raw material is unformed, a method of changing a formation condition, and the like. The factors are not clear which affect a situation that further excellent ISS cycle characteristics can be achieved by setting the specific surface area of the positive electrode material 23 in the above described range, but the present inventors guess the factors in the following way. Specifically, if the specific surface area of the positive electrode material 23 is in the above described range, the surface area contributes to a situation that the state of charge (SOC) of the lead storage battery 1 is kept in a relatively high state, and the negative electrode active material tends to be easily sufficiently reduced. Because of this, the current collecting portion 32 of the negative electrode (negative electrode ear portion) resists being converted into lead sulfate. It is assumed that as a result, the deterioration (ear thinning) of the current collecting portion 32 of the negative electrode is suppressed, and accordingly more excellent ISS cycle characteristics can be achieved.

The specific surface area of the positive electrode material 23 can be measured, for instance, by the BET method. The BET method is a method of making the surface of a measurement sample adsorb an inert gas of which one molecule size is known (for instance, nitrogen gas), and determining the surface area from the adsorption amount and the occupying area of the inert gas; and is a general measurement method of the specific surface area. Specifically, the specific surface area is measured on the basis of the following BET equation.

The relational expression of the following expression (1) holds well when $P/P_o$ is in a range of 0.05 to 0.35. Incidentally, in the expression (1), the details of each symbol are as follows.

P: adsorption equilibrium pressure in adsorption equilibrium state at certain temperature

$P_o$: saturated vapor pressure at adsorption temperature

V: amount of adsorption at adsorption equilibrium pressure P

$V_m$: amount of absorbing monomolecular layer (adsorption amount when gas molecules have formed monomolecular layer on solid surface)

C: BET constant (parameter relating to interaction between solid surface and adsorbed substance)

[Expression (1)]

$$\frac{P}{V(P_0 - P)} = \left(\frac{C-1}{V_m C}\right)\left(\frac{P}{P_0}\right) + \frac{1}{V_m C} \qquad \cdots (1)$$

The following expression (2) is obtained by an operation of modifying the expression (1) (dividing numerator and denominator on left side by P). The specific surface area meter that is used for the measurement makes a gas molecule of which the adsorption occupying area is known adsorbed onto the sample, and measures a relation between the amount (V) of adsorption and the relative pressure ($P/P_o$). On the basis of the measured V and $P/P_o$, the left side of the expression (2) and $P/P_o$ are plotted. Here, assuming that the gradient is s, the following expression (3) is derived from the expression (2). Assuming that the intercept is i, the intercept i and the gradient s are given by the following expressions (4) and (5), respectively.

[Expression (2)]

$$\frac{1}{V\left(\frac{P_0}{P} - 1\right)} = \left(\frac{C-1}{V_m C}\right)\left(\frac{P}{P_0}\right) + \frac{1}{V_m C} \qquad \cdots (2)$$

[Expression (3)]

$$s = \frac{C-1}{V_m C} = \frac{C}{V_m C} - \frac{1}{V_m C} = \frac{1}{V_m} - \frac{1}{V_m C} \qquad \cdots (3)$$

[Expression (4)]

$$i = \frac{1}{V_m C} \qquad \cdots (4)$$

[Expression (5)]

$$s = \frac{1}{V_m} - i \qquad \cdots (5)$$

When the expressions (4) and (5) are modified, the following expressions (6) and (7) are obtained, respectively, and the following expression (8) is obtained which determines an amount $V_m$ of the adsorbed monomolecular layer. Specifically, when several points of the amount V of adsorption are measured at a certain relative pressure $P/P_o$, and the gradient and intercept of the plot are determined, the amount $V_m$ of the adsorbed monomolecular layer is determined.

[Expression (6)]

$$s \times V_m = 1 - i \times V_m \qquad \cdots (6)$$

[Expression (7)]

$$(s + i)V_m = 1 \qquad \cdots (7)$$

[Expression (8)]

$$V_m = \frac{1}{s+i} \quad \cdots (8)$$

The total surface area $S_{total}$ ($m^2$) of the sample is determined by the following expression (9), and the specific surface area S ($m^2/g$) is determined by the following expression (10) on the basis of the total surface area $S_{total}$. Incidentally, in the expression (9), N represents an Avogadro's number, $A_{CS}$ represents an adsorption cross-sectional area ($m^2$), and M represents a molecular weight. In addition, in the expression (10), w represents the quantity (g) of the sample.
[Expression (9)]

$$S_{total} = (V_m \times N \times A_{CS})M \quad \cdots (9)$$

[Expression (10)]

$$S = \frac{S_{total}}{w} \quad \cdots (10)$$

(Negative electrode plate)

As is shown in Figures 4, 5(b) and 6, the negative electrode plate 13 comprises a negative electrode current collector 31, and a negative electrode material 33 which is filled in the negative electrode current collector 31; and the negative electrode material 33 constitutes a negative electrode material filled portion 34. The negative electrode current collector 31 has a current collecting portion 32 of the negative electrode (negative electrode ear portion). The surface of the current collecting portion of the negative electrode 32 is formed of a surface layer 32a containing Sn.

Similarly to the positive electrode plate 12, a portion filled with the negative electrode material 33 in the negative electrode plate 13 represents the negative electrode material filled portion 34. The details of the negative electrode material filled portion 34 are similar to those of the positive electrode material filled portion 24.

(Negative electrode current collector)

The negative electrode current collector 31 comprises: a negative electrode material supporting portion 31a; an upper side frame portion (upper peripheral portion) 31b which is formed into a belt shape on an upper side of the negative electrode material supporting portion 31a; and a current collecting portion 32 of the negative electrode, which is provided on the upper side frame portion 31b. The current collecting portion 32 of the negative electrode is provided, for instance, in such a way as to partially protrude upward from the upper side frame portion 31b. The contour of the negative electrode material supporting portion 31a is, for instance, rectangle (oblong or square), and is formed in a grid shape. The negative electrode material supporting portion 31a may have such a shape that the lower corner portion is cut off, as is shown in Figure 6(b). The negative electrode current collector 31 constitutes an electrically-conducting path of an electric current to the negative electrode material 33.

The deterioration (ear thinning) of the current collecting portion 32 of the negative electrode is sufficiently suppressed due to the surface of the current collecting portion 32 of the negative electrode, at least a part of which substantially contains Sn (tin), and thereby the excellent ISS cycle characteristics can be achieved. Specifically, the negative electrode plate 13 having the current collecting portion 32 of the negative electrode, in which at least a part of the surface contains Sn, is useful for providing a long-life lead storage battery which resists reaching the sudden end of the lifetime under the PSOC. The surface layer 32a may contain mainly Pb except for Sn.

The content of Sn is 50 parts by mass or more, based on 100 parts by mass of the surface layer, from the viewpoint that the deterioration (ear thinning) of the current collecting portion 32 of the negative electrode is suppressed and the ISS cycle characteristics are further excellent. The content of Sn may be 100 parts by mass, from the viewpoint that the ISS cycle characteristics are particularly excellent and the viewpoint of the manufacture. Incidentally, when the content of Sn is 100 parts by mass, in other words, when the surface layer 32a consists of Sn, the surface layer 32a may contain unavoidable impurities other than Sn. Examples of such impurities include Ag, Al, As, Bi, Ca, Cd, Cu, Fe, Ni, Sb and Zn.

The reason why the deterioration (ear thinning) or rupture of the current collecting portion 32 of the negative electrode is suppressed by the surface layer 32a containing Sn being provided in the current collecting portion 32 of the negative electrode is not necessarily clear, but the present inventors guess the reason in the following way. Firstly, in

the case where the lead storage battery is used in a state in which complete charging is not performed and the charge is insufficient (PSOC state), a stratification phenomenon occurs in which a difference in the concentration of dilute sulfuric acid in an electrolytic solution occurs between an upper part and a lower part of the electrode plate in the battery. This is because air bubbles which are generated from the electrode plate in the case where the complete charging is performed are not generated in the PSOC state, and accordingly stirring of the electrolytic solution becomes insufficient. In this case, the concentration of the dilute sulfuric acid becomes high in the lower part of the electrode, and the sulfation occurs. The sulfation is such a phenomenon that lead sulfate which is a discharge product resists returning to a state of charge. Because of this, when the sulfation occurs, only the upper part of the electrode becomes to react intensively. It is assumed that as a result, in the upper part of the electrode, such deterioration progresses that the connection between the active materials becomes weak, a charge-discharge reaction progresses also in the ear portion, and the ear portion is converted into lead sulfate. It is considered that due to the mechanism as described above, the dissolution and precipitation of lead sulfate are repeated also in the ear portion and the ear thinning or the rupture occurs. By having the surface layer 32a containing Sn provided in the current collecting portion 32 of the negative electrode, it becomes easy for the lead storage battery to keep a potential of the surface layer 32a at a state higher than a potential at which the lead sulfate repeats the dissolution and precipitation. It is assumed that thereby, the deterioration (ear thinning or rupture) of the current collecting portion 32 of the negative electrode is suppressed.

Incidentally, it is preferable that the whole of the current collecting portion 32 of the negative electrode is covered with the surface layer 32a, but there may be a portion on which the surface layer 32a is not provided. For instance, the surface layer 32a may be provided only on one principal surface out of the current collecting portion 32 of the negative electrode. In the case where the deterioration also at the portion other than the current collecting portion 32 of the negative electrode in the negative electrode current collector 31 (for instance, upper side frame portion 31b) should be suppressed, the surface layer 32a containing Sn may be provided also on the surface of the portion.

The composition in other portions than the surface layer 32a of the negative electrode current collector 31 may be similar to that of the positive electrode current collector 21. The negative electrode current collector 31 can be produced in a similar method to that for the positive electrode current collector 21, for instance, except that the surface layer 32a is formed. A method of producing the negative electrode current collector 31 may include, for instance, a step of producing a current collector by a similar method to that for the positive electrode current collector 21, and a step of forming the surface layer 32a at a predetermined position thereafter; or may include a step of preparing an alloy plate on which the surface layer 32a is formed beforehand, and a step of working the alloy plate to obtain the current collector.

Examples of a method for forming the surface layer 32a include a rolling method, and a hot-dip plating method. The rolling method is a method of overlapping a material (for instance, metal plate, alloy plate or the like) on which the surface layer 32a is to be formed with a material (for instance, sheet containing Sn) which forms the surface layer 32a, and rolling the overlapped materials. On the other hand, the hot-dip plating method is a method of immersing a portion on which the surface layer 32a should be formed, in a melting basin in which a material (material containing Sn) is melted that forms the surface layer 32a, and plating the portion. In the present embodiment, among these methods, the rolling method is preferable.

The method for forming the surface layer 32a by the rolling method may be, for instance, the following method. Firstly, a rolled sheet is produced by an operations (process of producing rolled sheet) of: overlapping an Sn sheet for forming the surface layer 32a on both surfaces of a sheet-shaped lead alloy (substrate); and rolling the resultant sheet with a rolling roller. Next, the rolled sheet is expanded by an expander while the position of the rolled sheet is adjusted so that the surface layer 32a is formed in a region which corresponds to the current collecting portion 32 of the negative electrode of the negative electrode current collector 31 (expanding method). Thereby, the negative electrode current collector 31 having the surface layer 32a is obtained. Incidentally, in this rolling method, the thickness of the surface layer 32a can be easily adjusted by an operation of adjusting the thickness of the alloy which becomes the substrate, the thickness of the sheet which becomes the surface layer 32a, and/or the thickness of the sheet after rolling. The thickness of the surface layer 32a after rolling may be, for instance, 10 to 60 $\mu$m, from the viewpoint of the manufacture.

The thickness d of the current collecting portion 32 of the negative electrode is, for instance, 0.6 mm or more, and may be set at 0.7 mm or more, 0.8 mm or more, 0.85 mm or more, 0.90 mm or more, 0.95 mm or more, or 1.0 mm or more, from the viewpoint that the current collecting portion 32 of the negative electrode resists being ruptured and the ISS cycle characteristics are further excellent The thickness d of the current collecting portion 32 of the negative electrode may be set at, for instance, 1.1 mm or less, from the viewpoint that the weight of the lead storage battery is reduced.

The width W2, the height H2 and the thickness of the negative electrode current collector 31 may be similar to those of the positive electrode current collector 21, or may not be similar. Incidentally, when the negative electrode material supporting portion 31a has such a shape that the lower corner portion is cut off, W2 and H2 are calculated assuming that the lower corner portion exists (see Figure 6(b)).

(Negative electrode material)

[Negative electrode active material]

The negative electrode material 33 contains, for instance, a negative electrode active material. The negative electrode material 33 is obtained, for instance, by operations of: aging and drying a paste of the negative electrode material containing a substance to become a negative electrode active material (raw material of negative electrode active material) by formation; and forming the resultant paste. Examples of the negative electrode active materials include spongy lead (Spongy lead). The spongy lead tends to react with sulfuric acid in the electrolytic solution and gradually turn into lead sulfate ($PbSO_4$). Examples of the raw materials of the negative electrode active material include lead powder. Examples of the lead powder include lead powder (mixture of main component PbO powder and scaly metallic lead, in ball mill type lead powder producing machine) which is produced, for instance, by the ball mill type lead powder producing machine or a Burton-pot type lead powder producing machine. The paste of the negative electrode material is composed of, for instance, basic lead sulfate, metallic lead and a low-grade oxide.

The content of the negative electrode active material (based on the total mass of negative electrode material 33) is, for instance, 93 mass% or more, and may be 95 mass% or more, or 98 mass% or more, from the viewpoints that the lead storage battery is excellent in low-temperature high-rate discharge performance and charge acceptability and is further excellent in the ISS cycle characteristics. The upper limit of the content of the negative electrode active material may be, for instance, 100 mass%. In other words, the negative electrode material 33 may substantially consist of the negative electrode active material. Incidentally, the content of the negative electrode active material described here means the amount of the negative electrode active material (which has been formed) contained in the negative electrode material 33 (which has been formed).

[Negative electrode additive]

The negative electrode material 33 may contain an additive. Examples of the additives include: (A) at least one resin selected from the group consisting of a sulfone group and a sulfonate group (resin having a sulfone group and/or a sulfonate group); and (B) other additives.

[(A) Resin having sulfone group and/or sulfonate group]

Examples of the (A) resin having a sulfone group and/or a sulfonate group include: a bisphenol-based resin having a sulfone group and/or a sulfonate group (hereinafter simply referred to as "bisphenol-based resin"); lignin sulfonic acid; and a lignin sulfonate. From the viewpoint that the charge acceptability enhances, for instance, the resin may be the bisphenol-based resin. Due to the negative electrode material 33 containing the bisphenol-based resin, the lead storage battery is excellent in the charge acceptability. Furthermore, in the lead storage battery 1 according to the present embodiment, the negative electrode material 33 contains the bisphenol-based resin, and thereby the lead storage battery 1 is further excellent in the ISS cycle characteristics.

The factors are not clear which affect a situation that the ISS cycle characteristics are further excellent due to the negative electrode material 33 containing the bisphenol-based resin, but the present inventors guess the factors in the following way. Specifically, the bisphenol-based resin contained in the negative electrode material 33 contributes to a situation that the state of charge (SOC) of the lead storage battery 1 is kept at a relatively high state, and thereby the current collecting portion 32 of the negative electrode resists being converted into the lead sulfate. It is assumed that as a result, the deterioration (ear thinning) of the current collecting portion 32 of the negative electrode is suppressed, and accordingly the ISS cycle characteristics are further excellent.

It is preferable for the bisphenol-based resin to be a bisphenol-based resin which is a condensate of: a bisphenol-based compound; at least one chemical compound selected from the group consisting of aminoalkylsulfonic acid, an aminoalkylsulfonic acid derivative, aminoarylsulfonic acid and an aminoarylsulfonic acid derivative; and at least one chemical compound selected from the group consisting of formaldehyde and a formaldehyde derivative.

It is preferable that the bisphenol-based resin has at least one structural unit, for instance, of a structural unit represented by the following formula (II), and a structural unit represented by the following formula (III).

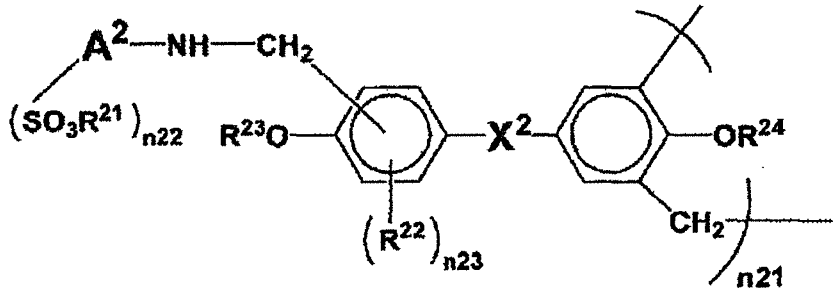 ...(II)

[In the formula (II), $X^2$ represents a divalent group; $A^2$ represents an alkylene group or an arylene group having 1 to 4 carbon atoms; $R^{21}$, $R^{23}$ and $R^{24}$ each independently represent an alkali metal or a hydrogen atom; $R^{22}$ represents a methylol group ($-CH_2OH$); n21 represents an integer of 1 to 150; n22 represents an integer of 1 to 3; and n23 represents 0 or 1. In addition, a hydrogen atom that is bonded directly to the carbon atom constituting a benzene ring may be substituted with an alkyl group having 1 to 5 carbon atoms.]

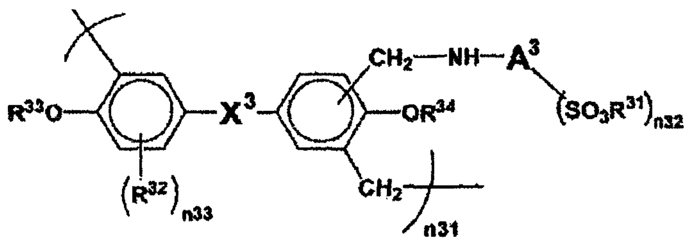 ...(III)

[In the formula (III), $X^3$ represents a divalent group; $A^3$ represents an alkylene group or an arylene group having 1 to 4 carbon atoms; $R^{31}$, $R^{33}$ and $R^{34}$ each independently represent an alkali metal or a hydrogen atom; $R^{32}$ represents a methylol group ($-CH_2OH$); n31 represents an integer of 1 to 150; n32 represents an integer of 1 to 3; and n33 represents 0 or 1. In addition, a hydrogen atom that is bonded directly to the carbon atom constituting a benzene ring may be substituted with an alkyl group having 1 to 5 carbon atoms.]

A ratio between the structural unit represented by the formula (II) and the structural unit represented by the formula (III) is not limited in particular, and can vary depending on synthetic conditions and the like. A resin that has only either one of the structural unit represented by the formula (II) and the structural unit represented by the formula (III) may be used for the bisphenol-based resin.

Examples of $X^2$ and $X^3$ include an organic group such as an alkylidene group (methylidene group, ethylidene group, isopropylidene group, sec-butylidene group and the like), a cycloalkylidene group (cyclohexylidene group and the like), a phenylalkylidene group (diphenylmethylidene group, phenylethylidene group and the like); and a sulfonyl group; and $X^2$ and $X^3$ may be an isopropylidene group ($-C(CH_3)_2-$), from the viewpoint that the charge acceptability is excellent, and may be a sulfonyl group ($-SO_2-$), from the viewpoint that the discharge characteristics are excellent. $X^2$ and $X^3$ may be substituted with a halogen atom such as a fluorine atom. When $X^2$ and $X^3$ are the cycloalkylidene groups, the hydrocarbon ring may be substituted with an alkyl group or the like.

Examples of $A^2$ and $A^3$ include an alkylene group having 1 to 4 carbon atoms such as a methylene group, an ethylene group, a propylene group and a butylene group; and a divalent arylene group such as a phenylene group and a naphthylene group. The arylene group may be substituted with an alkyl group or the like.

Examples of alkali metals of $R^{21}$, $R^{23}$, $R^{24}$, $R^{31}$, $R^{33}$ and $R^{34}$ include sodium and potassium. From the viewpoint that the ISS cycle characteristics further become excellent and solubility in a solvent is excellent, n21 and n31 are, for instance, from 1 to 150, and may be from 10 to 150. From the viewpoint that the ISS cycle characteristics, discharge characteristics and charge acceptability tend to easily enhance in a well-balanced manner, n22 and n32 are, for instance, 1 or 2. From the viewpoint that the ISS cycle characteristics become further excellent and the storage stability of the bisphenol-based resin is excellent, n23 and n33 are 0, for instance, though the values vary depending on the production conditions.

Examples of the lignin sulfonates of the component (A) include an alkali metal salt in which a hydrogen atom of the sulfone group ($-SO_3H$) in a lignin sulfonic acid is substituted with an alkali metal. Examples of the alkali metal salts include a sodium salt and a potassium salt.

The weight average molecular weight of the (A) resin having a sulfone group and/or a sulfonate group is, for instance, 3000 or more, and may be 10000 or more, 20000 or more or 30000 or more, from the viewpoint of suppressing the elution of the (A) resin having a sulfone group and/or a sulfonate group from the electrode to the electrolytic solution

in the lead storage battery to thereby easily enhance the ISS cycle characteristics. The weight average molecular weight of the resin having a sulfone group and/or a sulfonate group is, for instance 200000 or less, and may be 150000 or less, or 100000 or less, from the viewpoint of suppressing the lowering of adsorbability to an electrode active material and the resultant lowering of dispersibility to thereby easily enhance the ISS cycle characteristics.

The weight average molecular weight of the (A) resin having a sulfone group and/or a sulfonate group can be measured, for instance, by gel permeation chromatography (hereinafter referred to as "GPC") on the following conditions.

(GPC condition)

Apparatus: high-speed liquid chromatograph LC-2200 Plus (made by JASCO Corporation)
Pump: PU-2080
Differential refractometer: RI-2031
Detector: ultraviolet and visible absorptiometer UV-2075 ($\lambda$: 254 nm)
Column oven: CO-2065
Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mmol/L) and triethylamine (200 mmol/L)
Flow velocity: 0.6 mL/min
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$; made by Tosoh Corporation), diethylene glycol (molecular weight: $1.06\times10^2$; made by KISHIDA CHEMICAL Co., Ltd.), and dibutylhydroxytoluene (molecular weight: $2.20\times10^2$; made by KISHIDA CHEMICAL Co., Ltd.)

[(B) other additives]

The negative electrode material 33 may contain (B) other additives. Examples of (B) other additives include barium sulfate, a carbonaceous material (carbonaceous electroconductive material), and short fiber for reinforcement. In the present embodiment, these additives may be used as needed, and the negative electrode material 33 may not contain, for instance, a carbonaceous material. However, from the viewpoint that the charge acceptability enhances and the ISS cycle characteristics further enhance, the negative electrode material 33 may contain a carbonaceous material as an additive. Incidentally, one example of the short fiber for reinforcement is a carbon fiber, but the carbon fiber may be added to the negative electrode material as the carbonaceous material (carbonaceous electroconductive material).

[Carbonaceous material]

Examples of the carbonaceous materials (carbonaceous electroconductive material) include graphite, carbon black, activated carbon and carbon nanotube. Examples of the carbon black include Furnace black (Ketjen black, and the like), and Acetylene black. From the viewpoint that charge acceptability enhances, the carbon black may be Ketjen black. From the viewpoint that the ISS cycle characteristics further enhance, the carbonaceous material may be graphite, and from the viewpoint that the ISS cycle characteristics particularly enhance, the carbonaceous material may be scaly graphite. When the scaly graphite is used, the lead storage battery is excellent also in balance among the charge performance, the ISS cycle characteristics and the low-temperature high-rate discharge performance.

An average primary particle size of the scaly graphite is, for instance, 100 to 500 $\mu$m, and may be 100 to 350 $\mu$m, or 100 to 220 $\mu$m, from the viewpoint that the ISS cycle characteristics further enhance. Here, the average primary particle size of the scaly graphite is determined in accordance with the laser diffraction/scattering method described in JIS M8511 (2005). Specifically, the average primary particle size is measured by operations of: using a laser diffraction/scattering type particle size distribution measuring apparatus (made by Nikkiso Co., Ltd.: Microtrac 9220 FRA); charging an appropriate amount of the scaly graphite sample into an aqueous solution which contains 0.5 vol% of polyoxyethylene octylphenyl ether (for instance, Triton X-100 made by Roche Diagnostics K.K.) of a commercially available surface active agent, as a dispersing agent; and irradiating the resultant solution with an ultrasonic wave of 40 W for 180 seconds while stirring the solution. The value of the determined average particle size (median diameter: D50) is defined to be the average primary particle size.

The content of the carbonaceous material is preferably 0.1 to 3 parts by mass with respect to 100 parts by mass of the negative electrode active material (spongy metallic lead) after the formation.

[Short fiber for reinforcement]

Examples of the short fibers for reinforcement include acrylic fiber, polyethylene fiber, polypropylene fiber, polyethylene terephthalate fiber and carbon fiber.

[Physical property of negative electrode material]

The specific surface area of the negative electrode material 33 is, for instance, 0.4 $m^2/g$ or larger, and may be 0.5 $m^2/g$ or larger, or 0.6 $m^2/g$ or larger, from the viewpoint that the discharge characteristics are excellent and the ISS cycle characteristics are further excellent. The specific surface area of the negative electrode material 33 is, for instance, 2 $m^2/g$ or smaller, and may be 1.8 $m^2/g$ or smaller, or 1.5 $m^2/g$ or smaller, from the viewpoint of suppressing the shrinkage of the negative electrode plate 13 during cycles. From these viewpoints, the specific surface area of the negative electrode material 33 is, for instance, 0.4 to 2 $m^2/g$, and may be 0.5 to 1.8 $m^2/g$ or 0.6 to 1.5 $m^2/g$. Incidentally, the specific surface area of the negative electrode material 33 described here means a specific surface area of the negative electrode material 33 (which has been formed). The specific surface area of the negative electrode material 33 can be adjusted, for instance, by a method of adjusting an amount of sulfuric acid and water to be added when the paste of the negative electrode material is produced, a method of refining the active material at such a stage that the negative electrode active material is unformed, a method of changing the formation condition, and the like. The specific surface area of the negative electrode material 33 can be measured, for instance, by the BET method.

(Ratio of mass p1 of positive electrode material to mass n1 of negative electrode material, pl/nl)

The ratio of the mass p1 of the positive electrode material 23 to the mass n1 of the negative electrode material 33, p1/n1, is, for instance, 1.15 or larger, and may be 1.20 or larger, 1.25 or larger, 1.35 or larger, or 1.40 or larger, from the viewpoint that the ISS cycle characteristics are further excellent. The mass ratio p1/n1 is, for instance, 1.60 or smaller and may be 1.45 or smaller, from the viewpoint that sufficient battery capacity tends to be easily obtained and from the viewpoint of practical use. The mass ratio p1/n1 is, for instance, 1.15 to 1.60, is 1.20 to 1.60, 1.25 to 1.60, 1.35 to 1.60, 1.40 to 1.60 or 1.15 to 1.45, and may also be 1.20 to 1.45, 1.25 to 1.45, 1.35 to 1.45 or 1.40 to 1.45, from the viewpoint that the sufficient battery capacity tends to be easily obtained and the ISS cycle characteristics are further excellent. Incidentally, the mass p1 of the positive electrode material 23 and the mass n1 of the negative electrode material 33 described here mean the mass of the positive electrode material 23 (which has been formed) and the mass of the negative electrode material 33 (which has been formed), respectively.

The factors are not clear which affect a situation that further excellent ISS cycle characteristics can be achieved by setting the mass ratio p1/n1 in the above described range, but the present inventors guess the factors in the following way. Specifically, when the mass ratio p1/n1 is within the above described range, the negative electrode active material becomes easy to be reduced sufficiently, and accordingly the state of charge (SOC) of the lead storage battery tends to stay in a relatively high range. As a result, the current collecting portion 32 of the negative electrode resists being converted into lead sulfate. The above factor is assumed to be one reason why the lead storage battery can achieve the further excellent ISS cycle characteristics.

The mass p1 of the positive electrode material 23 and the mass n1 of the negative electrode material 33 are values each obtained by subtracting the total mass of the grid body from the total mass of the polar plate. In other words, when the masses of the positive electrode materials 23 of each positive electrode plate 12 in the polar plate group 11 are equal to each other, the mass p1 of the positive electrode material 23 is a value obtained by multiplying the mass of the positive electrode material in one positive electrode plate 12 by the number of positive electrode plates 12 constituting the polar plate group 11. In addition, when the masses of the negative electrode materials 33 of each negative electrode plate 13 in the polar plate group 11 are equal to each other, the mass n1 of the negative electrode material 33 is a value obtained by multiplying the mass of the negative electrode material in one negative electrode plate 13 by the number of negative electrode plates 13 constituting the polar plate group 11. When p1/n1 is calculated, the positive electrode plate and the negative electrode plate after the formation are used which have been dried by the following procedure. Firstly, the positive electrode plates and the negative electrode plates after the formation are separated one by one from the polar plate group. The positive electrode plate after the formation is dried in an air atmosphere at 60°C for 16 hours. Next, the negative electrode plate after the formation is dried in a nitrogen atmosphere at 60°C for 16 hours.

(Total surface area S1 of electrode material filled portion and apparent total volume V1)

The total surface area S1 (total surface area of positive electrode material filled portion 24 and negative electrode material filled portion 34) of the electrode material filled portion is the total of the surface areas of portions which contribute to power generation of the positive electrode plate 12 and the negative electrode plate 13, in a single cell which is the

minimum unit of the lead storage battery 1, in other words, in a polar plate group 11 that is inserted in one cell chamber. In other words, when the total of the surface areas of the front and back faces of each of the electrode plates in the polar plate group 11 is equal with each other, the total surface area S1 of the electrode material filled portion is a value obtained by multiplying the total of the surface areas of the front and back faces of an electrode plate by the number of electrode plates (positive electrode plate 12 and negative electrode plate 13) which constitute the polar plate group 11. More specifically, as is shown in Figure 4, in the case where a width of the electrode material filled portion is represented by a filled portion width W1, a height of the electrode material filled portion is represented by a filled portion height HI, and the number of electrodes in the polar plate group 11 is represented by number N1 of electrodes, the total surface area S1 is expressed by the following expression (a).

$$\text{Total surface area S1} = (\text{filled portion width W1} \times \text{filled portion height H1}) \times 2 \times \text{number N1 of electrodes} \ldots \text{(a)}$$

Incidentally, when the filled portion width W1 and the filled portion height H1 among the plurality of electrode plates are different from others, the filled portion width W1 and the filled portion height H1 in the above described formula (a) may be average values of the filled portion widths W1 and the filled portion heights H1 in the plurality of electrode plates, respectively. In addition, when the electrode material supporting portions (positive electrode material supporting portion 21a and negative electrode material supporting portion 31a) have such a shape that the lower corner portion is cut off, W1 and H1 are calculated assuming that the lower corner portion exists. The total surface area S1 in the lead storage battery after the formation can be measured by an operation of taking out the polar plate group from the battery case.

The total surface area S1 of the electrode material filled portion can be adjusted by an operation, for instance, of changing the filled portion width W1, the filled portion height H1 or the number N1 of electrodes.

An apparent total volume V1 of the electrode material filled portion (apparent total volume of positive electrode material filled portion 24 and negative electrode material filled portion 34) is an apparent total volume of a portion which contributes to the power generation, out of a single cell which is the minimum unit of the lead storage battery 1, in other words, out of the polar plate group 11 which is inserted in one cell chamber. In other words, the apparent total volume is a volume of a region which is surrounded by the positive electrode material filled portion 24 and the negative electrode material filled portion 34, and is an apparent volume which includes gaps between the adjacent positive electrode material filled portion 24 and the negative electrode material filled portion 34. A space between the adjacent positive electrode material filled portion 24 and the negative electrode material filled portion 34 forms an empty space in which the electrode material filled portion does not exist, but the volume of the region including the empty space in which the electrode material filled portion does not exist represents the apparent total volume V1. More specifically, as is shown in Figure 3 and Figure 4, when the thickness of the polar plate group 11 in a stacked direction of the positive electrode plate 12 and the negative electrode plate 13 is represented by a thickness D1 of the polar plate group, the apparent total volume V1 is expressed by the following expression (b).

$$\text{Apparent total volume V1} = \text{filled portion width W1} \times \text{filled portion height H1} \times \text{thickness D1 of polar plate group} \ldots \text{(b)}$$

Incidentally, when the filled portion width W1 and the filled portion height H1 among the plurality of electrode plates are different from others, the filled portion width W1 and the filled portion height H1 in the above described formula (b) may be average values of the filled portion widths W1 and the filled portion heights H1 in the plurality of electrode plates, respectively. In addition, when the electrode material supporting portions (positive electrode material supporting portion 21a and negative electrode material supporting portion 31a) have such a shape that the lower corner portion is cut off, W1 and H1 are calculated assuming that the lower corner portion exists. The apparent total volume V1 in the lead storage battery after the formation can be measured by an operation of taking out the polar plate group from the battery case.

The thickness D1 of the polar plate group is measured by the following method. The thickness is measured in a range 10 mm in a direction from a boundary between the upper side frame portion of the electrode plate and the electrode material filled portion to a lower side frame portion of the electrode plate. In the case where the separator is arranged on the outermost side of the polar plate group, the height of the rib of the separator is not included in the thickness of the polar plate group. Specifically, in the case of the configuration in which the separator is arranged in the outermost side of the polar plate group, the thickness of the polar plate group is measured at a position of the base

portion 41 of the separator.

The apparent total volume V1 of the electrode material filled portion can be adjusted by an operation of changing: the filled portion width W1; the filled portion height HI; the thickness D1 of the polar plate group, the number N1 of the electrodes, the filling amount of the positive electrode material, the filling amount of the negative electrode material, the thickness of the current collector, the thickness of the separator, and the like. Incidentally, in the present specification, the thickness of the ear portion (current collecting portion) is defined to be the thickness of the current collector.

A ratio of the total surface area S1 to the apparent total volume V1 (S1/V1) is 8.9 $cm^{-1}$ or larger. Thereby, the lead storage battery is excellent in the ISS cycle characteristics. From the viewpoint that the ISS cycle characteristics are further excellent, S1/V1 may be 9.5 $cm^{-1}$ or larger, or 10.1 $cm^{-1}$ or larger. The upper limit value of S1/V1 is not limited in particular, but is, for instance, 12.5 $cm^{-1}$, and may be 11.9 $cm^{-1}$ or 11.3 $cm^{-1}$, in practical use of the lead storage battery. From these viewpoints, S1/V1 is, for instance, 8.9 to 12.5 $cm^{-1}$, and may be 9.5 to 11.9 $cm^{-1}$, or 10.1 to 11.3 $cm^{-1}$.

The thicknesses of the positive electrode plate 12 and the negative electrode plate 13 can be changed by an operation of adjusting the filling amounts of the positive electrode material 23 and the negative electrode material 33. Specifically, when the filling amount of the electrode material paste is increased, the thickness of the electrode plate increases, and when the filling amount of the electrode material paste is decreased, the thickness of the electrode plate decreases. Because of this, S1/V1 can be adjusted by an operation of adjusting the filling amounts of the positive electrode material 23 and the negative electrode material 33. In addition, S1/V1 can be adjusted also by an operation of adjusting the thicknesses of the positive electrode current collector 21 and the negative electrode current collector 31, the thickness of the separator 14, the height of the rib in the separator, and the like.

<Electrolytic solution>

The electrolytic solution contains, for instance, sulfuric acid. The electrolytic solution may further contain an aluminum ion, from the viewpoint that excellent charge acceptability is obtained, that the liquid reduction performance is excellent and that the ISS cycle characteristics are further excellent. The electrolytic solution containing the aluminum ion can be obtained, for instance, by an operation of mixing sulfuric acid with aluminum sulfate (for instance, aluminum sulfate powder). The aluminum sulfate to be dissolved in the electrolytic solution can be added as an anhydride or a hydrate.

A specific gravity of the electrolytic solution (for instance, electrolytic solution containing aluminum ion) may be in the following range. The specific gravity of the electrolytic solution is, for instance, 1.25 or more, and may be 1.28 or more, 1.285 or more, or 1.29 or more, from the viewpoint of suppressing a permeation short circuit and freeze, and the viewpoint that the discharge characteristics are excellent (for instance, viewpoint that low-temperature high-rate discharge performance is excellent). The specific gravity of the electrolytic solution is, for instance, 1.33 or less, and may be 1.32 or less, 1.315 or less, 1.31 or less, or 1.29 or less, from the viewpoint that the charge acceptability enhances and the ISS cycle characteristics further enhances. From these viewpoints, the specific gravity of the electrolytic solution is, for instance, 1.25 to 1.33, and may be 1.25 to 1.32, 1.25 to 1.315, or 1.25 to 1.29. The value of the specific gravity of the electrolytic solution can be measured, for instance, with a floating type specific gravity meter or a digital specific gravity meter made by Kyoto Electronics Manufacturing Co., Ltd.

A concentration of the aluminum ions (aluminum ion concentration) in the electrolytic solution is, for instance, 0.01 mol/L or more, and may be 0.02 mol/L or more, or 0.05 mol/L or more, from the viewpoint that the charge acceptability enhances, the liquid reduction performance is excellent and the ISS cycle characteristics further enhance. The aluminum ion concentration of the electrolytic solution may be 0.2 mol/L or less, 0.15 mol/L or less, 0.14 mol/L or less, or 0.13 or less, from the viewpoint that a balance among the charge acceptability, the ISS cycle characteristics and the low-temperature high-rate discharge performance is excellent. From these viewpoints, the aluminum ion concentration of the electrolytic solution is, for instance, 0.01 to 0.2 mol/L, and may be 0.02 to 0.15 mol/L, 0.05 to 0.14 mol/L or 0.05 to 0.13 mol/L. The aluminum ion concentration of the electrolytic solution can be measured, for instance, by ICP emission spectroscopy (high frequency induction coupled plasma emission spectroscopy).

The details of such a mechanism are not clear that the charge acceptability enhances due to the aluminum ion concentration of the electrolytic solution being within a predetermined range, but the present inventors guess the mechanism in the following way. Specifically, it is assumed that when the aluminum ion concentration is in the predetermined range, under arbitrary low SOC, a solubility of the crystalline lead sulfate which is a discharge product into the electrolytic solution increases or a diffusibility of the electrolytic solution into the electrode active material enhances due to a high ion electroconductivity of the aluminum ion, and accordingly the charge acceptability enhances.

The details of such a mechanism are not clear that the liquid reduction performance is excellent due to the aluminum ion concentration of the electrolytic solution being within a predetermined range, but the present inventors guess the mechanism in the following way. When large-current charging is repeated and thereby an electrolysis of water in the electrolytic solution occurs, hydrogen gas is generated due to hydrogen ions existing in the vicinity of the negative electrode, the hydrogen gas is discharged to the outside of the battery, and accordingly water in the electrolytic solution

tends to easily decrease. On the other hand, when the aluminum ion concentration is in the predetermined range, not only the hydrogen ion but also the aluminum ion moves to the vicinity of the negative electrode during charging. Due to the influence of the aluminum ion, the number of hydrogen ions existing in the vicinity of the negative electrode decreases, accordingly the reaction potential falls, and the hydrogen generation overpotential increases. Due to these reasons, it is assumed that when the aluminum ion concentration is in the predetermined range, the liquid reduction performance is excellent (liquid reduction of electrolytic solution can be suppressed).

The details of such a mechanism are not clear that the ISS cycle characteristics further enhance due to the aluminum ion concentration of the electrolytic solution being within a predetermined range, but the present inventors guess the mechanism in the following way. Specifically, if the aluminum ion concentration is in the predetermined range, the state of charge (SOC) of the lead storage battery 1 tends to be easily kept at a comparatively high state. Thereby, the current collecting portion 32 of the negative electrode resists converting to lead sulfate. It is assumed that as a result, the deterioration (ear thinning or rupture) of the current collecting portion 32 of the negative electrode is suppressed, and the ISS cycle characteristics further enhance.

<Separator>

Figure 7 is a view showing a bag-like separator 14, and an electrode plate (for instance, negative electrode plate 13) to be accommodated in the separator 14. It is preferable that the separator is a bag shape so as to be capable of accommodating at least one electrode plate of the positive electrode plate 12 and the negative electrode plate 13, as is shown in Figure 7. For instance, such an embodiment is preferable that one of the positive electrode plate 12 and the negative electrode plate 13 is accommodated in the bag-like separator 14, and is alternately layered on the other out of the positive electrode plate 12 and the negative electrode plate 13. When the bag-like separator 14 is applied to the positive electrode plate 12, there is a possibility that the positive electrode plate 12 penetrates the separator by the elongation of the positive electrode current collector 21; and accordingly it is preferable that the negative electrode plate 13 is accommodated in the bag-like separator 14.

It is preferable that the bag-like separator 14 has a convex rib and a base portion supporting the rib. One aspect of the separator of the present embodiment will be described below with reference to Figures 7 to 9.

Figure 8(a) is a front view showing the separator 40 which is used in the production of the bag-like separator 14; and Figure 8(b) is a cross-sectional view of the separator 40. Figure 9 is a cross-sectional view of the separator 40 and the electrode plates (positive electrode plate 12 and negative electrode plate 13).

As shown in Figure 8, the separator 40 has a flat base portion 41, a plurality of convex ribs 42, and mini ribs 43. The base portion 41 supports the ribs 42 and the mini ribs 43. The plurality (large number) of ribs 42 are formed in the middle in the width direction of the separator 40, in such a way as to extend in the longitudinal direction of the separator 40. The plurality of ribs 42 are arranged in such a way as to be approximately parallel to each other on one surface 40a of the separator 40. The interval between the ribs 42 is, for instance, 3 to 15 mm. One end in a height direction of the rib 42 is integrated with the base portion 41, and the other end in the height direction of the rib 42 comes in contact with one electrode plate 44a out of the positive electrode plate 12 and the negative electrode plate 13 (see Figure 9). The base portion 41 faces the electrode plate 44a in the height direction of the rib 42. The rib is not arranged on the other surface 40b of the separator 40, and the other surface 40b of the separator 40 faces or comes in contact with the other electrode 44b (see Figure 9) out of the positive electrode plate 12 and the negative electrode plate 13.

A plurality (large number) of mini ribs 43 are formed on both sides in the width direction of the separator 40 in such a way as to extend in the longitudinal direction of the separator 40. The mini rib 43 has a function of enhancing the separator strength in order to prevent a corner of the electrode from breaking through the separator and causing a short circuit, when the lead storage battery 1 vibrates in a transverse direction. Incidentally, it is preferable that any of the height, the width and the interval of the mini ribs 43 is smaller than corresponding those of the ribs 42. In addition, the cross-sectional shape of the mini rib 43 may be the same as or may also be different from that of the rib 42. It is preferable that the cross-sectional shape of the mini rib 43 is semicircular. In addition, the mini rib 43 does not need to be formed in the separator 40.

The thickness T of the base portion 41 is, for instance, 0.4 mm or less, and may be 0.3 mm or less, or 0.25 mm or less, from the viewpoint of acquiring excellent charge acceptability and discharge characteristics. The lower limit of the thickness T of the base portion 41 is not limited in particular, but can be set at 0.05 mm or 0.1 mm, from the viewpoint that the separator is excellent in an effect for suppressing the short circuit.

The height H (height in direction opposing to base portion 41 and electrode) of the rib 42 is, for instance, 1 mm or less, and may be 0.8 mm or 0.6 mm or less, from the viewpoint of acquiring the excellent charge acceptability. The lower limit of the height H of the rib 42 is, for instance, 0.3 mm, and may be 0.4 mm or 0.5 mm, from the viewpoint that the separator suppresses the oxidative deterioration of the positive electrode.

It is preferable for the lower limit of the ratio H/T of the height H of the rib 42 to the thickness T of the base portion 41 to be 2 or larger, from the viewpoint that the separator is excellent in oxidation resistance. When the ratio H/T

is 2 or larger, it is assumed that the oxidation resistance of the separator enhances, because the lead storage battery can sufficiently secure a portion which does not come in contact with an electrode (for instance, positive electrode plate 12).

The lower limit of the ratio H/T may be 2.3 or 2.5, from the viewpoint that the separator is excellent in the oxidation resistance and the productivity. It is preferable for the upper limit of the ratio H/T to be 6, from the viewpoint that the rib is excellent in shape retainability and is excellent in an effect of suppressing the short circuit. When the ratio H/T is 6 or smaller, it is assumed that the short circuit is suppressed, because a distance between the positive electrode plate 12 and the negative electrode plate 13 is enough. In addition, when the ratio H/T is 6 or smaller, it is assumed that the rib is not damaged when the lead storage battery 1 is assembled, and the battery characteristics such as charge acceptability are adequately maintained. The upper limit of the ratio H/T may be 5, 4 or 3, from the viewpoint that the rib is excellent in the effect of suppressing the short circuit and is excellent in the shape retainability.

In addition, the upper bottom width B of the rib 42 (see Figure 8(b)) is preferably 0.1 to 2 mm, and may be 0.2 to 1 mm or 0.2 to 0.8 mm, from the viewpoint that the rib is excellent in the shape retainability and in the oxidation resistance. The lower bottom width A of the rib 42 is preferably 0.2 to 4 mm, and may be 0.3 to 2 mm or 0.4 to 1 mm, from the viewpoint that the rib is excellent in the shape retainability. The ratio (B/A) of the upper bottom width B to the lower bottom width A is preferably 0.1 to 1, and may be 0.2 to 0.8 or 0.3 to 0.6, from the viewpoint that the rib is excellent in the shape retainability.

A microporous polyethylene sheet can be used for the separator 40. In addition, usable materials for the separator 40 include the microporous polyethylene sheet; and a laminate of glass fibers and an acid resistant paper. From the viewpoints that the ISS cycle characteristics are further excellent and the liquid reduction performance is excellent, it is preferable not to solely use the microporous polyethylene sheet, but to concomitantly use a nonwoven fabric (separator consisting of nonwoven fabric) consisting of at least one fiber selected from the group consisting of glass fiber, polyolefin-based fiber, and fiber made of a material such as pulp, and the microporous polyethylene sheet. In this case, the microporous polyethylene sheet and the nonwoven fabric may be overlapped so that the surface opposite to the negative electrode plate of the separator is composed of the nonwoven fabric, and be used. Specifically, the negative electrode plate of the lead storage battery and the nonwoven fabric may be brought into contact with each other. The factor is not clear which affects a situation that the ISS cycle characteristics are further excellent due to the use of the nonwoven fabric, but the present inventors guess the factor in the following way. Specifically, the shortage of charging under PSOC is improved by using the nonwoven fabric, and it becomes easy for SOC to be kept at a high range. By the SOC staying in the high range, the current collecting portion 32 of the negative electrode resists converting into the lead sulfate, and the current collecting portion 32 of the negative electrode resists thinning. The above factor is assumed to be one reason why the ISS cycle characteristics are further excellent. In addition, the factor is not clear which affects a situation that the liquid reduction performance is excellent due to the use of the nonwoven fabric, but is assumed to be in the following way. Due to the use of the nonwoven fabric, a gas generated by electrolysis is captured in the nonwoven fabric, resulting in that the gas exists in the interface between the electrode material and the electrolytic solution. As a result, the area of the interface between the electrode material and the electrolytic solution decreases, and the overpotential for the gas generation increases. It is assumed that thereby the lead storage battery is further excellent in the liquid reduction performance.

The above described nonwoven fabric may appropriately contain an inorganic oxide powder of silica and/or the like. In addition, the nonwoven fabric may be solely used as the separator, without being combined with the microporous polyethylene sheet.

As is shown in Figure 8(a), the separator 40 which is used in the production of the bag-like separator 14 is formed, for instance, in such a shape as a long sheet. The bag-like separator 14 is obtained by operations of: cutting the separator 40 to an appropriate length; folding the separator into two at the center in the longitudinal direction of the separator 40; and mechanically sealing, crimping or thermally bonding both of the side portions (for instance, reference numeral 45 in Figure 7 indicates mechanically sealed portion). In the present embodiment, the separator 40 may be used as it is, as a separator.

<Battery case>

Figure 10 is a perspective view showing a battery case. Figure 11 is a cross-sectional view taken along the line XI-XI in Figure 10. As shown in Figure 10 and Figure 11, the inside of the battery case 2 is divided into six sections by five partition walls 51, and six cell chambers 52 are formed. Each cell chamber 52 is an empty space into which respective polar plate groups 11 are inserted. The polar plate group 11 is referred to also as a single cell, and the electromotive force is 2 V. Electrical equipment for automobiles operates by a raised or depressed voltage from the direct voltage 12 V, and accordingly six polar plate groups 11 are connected in series so that 2 V $\times$ 6 = 12 V. Because of this, when the lead storage battery 1 is used as the electrical equipment for automobiles, six cell chambers 52 are necessary. Incidentally, when the lead storage battery 1 is used for other purposes, the number of the cell chambers 52 is not limited to six.

Ribs 53 which extend in the height direction of the battery case 2 are provided on surfaces of both sides of the partition walls 51 and a pair of inner wall surfaces which oppose to the partition walls 51 of the battery case 2. The rib 53 has a function of appropriately pressurizing (compressing) the polar plate group 11 which has been inserted into the cell chamber 52, in a stacking direction of the polar plate group 11 (stacking direction of positive electrode plate 12 and negative electrode plate 13 when polar plate group 11 is stored in battery case 2).

When the inner dimension of the cell chamber 52 in the stacking direction of the polar plate group 11 is represented by A1, a ratio of the thickness D1 of the polar plate group to the inner dimension A1 (D1/A1) is usually 0.85 or larger. D1/A1 may be 0.90 or larger, or 0.96 or larger. The upper limit value of D1/A1 is not limited in particular, but may be, for instance, 1.00. Specifically, D1/A1 is, for instance, 0.85 to 1.00, and may be 0.90 to 1.00, or 0.96 to 1.00. In addition, the lower limit value of the inner dimension A1 may be, for instance, 3.0 cm, and the upper limit value of the inner dimension A1 may be, for instance, 5.0 cm.

According to the lead storage battery 1 of the present embodiment, the excellent ISS cycle characteristics can be obtained, but the factor is not clear which affects a situation that such an effect is obtained. The present inventors guess the factors in the following way. Specifically, it is assumed that due to S1/V1 being 8.9 $cm^{-1}$ or larger, the current density applied to one electrode becomes small, the internal resistance decreases, and accordingly the charge acceptability and the discharge performance tend to easily enhance. As a result, it becomes easy to keep the SOC at the high range, accordingly the current collecting portion 32 of the negative electrode resists converting into lead sulfate for the reason that the SOC stays in the high range, and the current collecting portion 32 of the negative electrode resists thinning. It is assumed that the excellent ISS cycle characteristics can be thereby obtained. In addition, it is assumed that one of the reasons is that because the charging reaction tends to easily progress, the lead sulfate which has been formed in the current collecting portion 32 of the negative electrode tends to be easily reduced to metallic lead.

<Method for manufacturing lead storage battery>

The method for manufacturing the lead storage battery 1 according to the present embodiment comprises, for instance: an electrode plate manufacturing step of obtaining electrode plates (positive electrode plate 12 and negative electrode plate 13); and an assembly step of assembling components containing the electrode plate to obtain a lead storage battery 1.

In the step of manufacturing the electrode plate, a unformed electrode plate is obtained, for instance, by: filling the current collectors (for instance, current collector grids such as cast grid body and expanded grid body) with pastes of electrode materials (paste of positive electrode material and paste of negative electrode material); and then aging and drying the resultant current collectors. The paste of the positive electrode material contains, for instance, a raw material (lead powder and the like) of the positive electrode active material, and may further contain another additive. The paste of the negative electrode material contains, for instance, a raw material (lead powder and the like) of the negative electrode active material and a resin (bisphenol-based resin and the like) having a sulfone group and/or a sulfonate group; and may further contain another additive.

The paste of the positive electrode material can be obtained, for instance, according to the following method. Firstly, the additive (short fiber for reinforcement and the like) and water are added to the raw material of the positive electrode active material. Next, dilute sulfuric acid is added thereto, then the mixture is kneaded, and the paste of the positive electrode material is obtained. When the paste of the positive electrode material is prepared, red lead ($Pb_3O_4$) may be used as the raw material of the positive electrode active material, from the viewpoint of enabling a reduction of the formation time. The unformed positive electrode plate can be obtained by operations of: filling the positive electrode current collector 21 with the paste of the positive electrode material; and then aging and drying the resultant current collector.

In the case where the short fiber for reinforcement is used in the paste of the positive electrode material, it is preferable that the amount of the short fiber for reinforcement to be blended is 0.005 to 0.3 mass%, and the amount of the short fiber for reinforcement may be 0.05 to 0.3 mass%, based on the total mass of the raw material (lead powder and the like) of the positive electrode active material.

Conditions of an atmosphere of a temperature of 35 to 85°C and a humidity of 50 to 98 RH% for 15 to 60 hours are preferable as aging conditions for obtaining the unformed positive electrode plate. Conditions of a temperature of 45 to 80°C for 15 to 30 hours are preferable as drying conditions.

The paste of the negative electrode material can be obtained, for instance, according to the following method. Firstly, a mixture is obtained by operations of: adding additives (resin having a sulfone group and/or a sulfonate group, short fiber for reinforcement, barium sulfate, and the like) to the raw material of the negative electrode active material; and dry mixing the substances. Then, the paste of the negative electrode material is obtained by operations of adding sulfuric acid (dilute sulfuric acid or the like) and a solvent (water such as ion-exchanged water, organic solvent, or the like) to this mixture; and kneading the resultant mixture. The unformed negative electrode plate can be obtained by operations of: filling the negative electrode current collector 31 (for instance, current collector grid such as cast grid body

and expanded grid body) with the paste of the negative electrode material; and then aging and drying the resultant current collector.

In the case where the resin having a sulfone group and/or a sulfonate group (bisphenol-based resin and the like), the carbonaceous material, the short fiber for reinforcement or the barium sulfate is used in the paste of the negative electrode material, it is preferable that the amount of each component to be blended is in the following range. It is preferable that the amount of the resin having a sulfone group and/or a sulfonate group to be blended is 0.01 to 2.0 mass%, and the amount of the resin may be 0.05 to 1.0 mass%, 0.1 to 0.5 mass% or 0.1 to 0.3 mass% in terms of the solid content of the resin, based on the total mass of the raw material (lead powder and the like) of the negative electrode active material. It is preferable that the amount of the carbonaceous material to be blended is 0.1 to 3 mass%, and the amount of the carbonaceous material may be 0.2 to 1.4 mass%, based on the total mass of the raw material (lead powder and the like) of the negative electrode active material. It is preferable that the amount of the short fiber for reinforcement to be blended is 0.05 to 0.15 mass%, based on the total mass of the raw material (lead powder and the like) of the negative electrode active material. It is preferable that the amount of barium sulfate to be blended is 0.01 to 2.0 mass%, and the amount of barium sulfate may be 0.01 to 1.0 mass%, based on the total mass of the raw material (lead powder and the like) of the negative electrode active material.

Conditions of an atmosphere of a temperature of 45 to 65°C and a humidity of 70 to 98 RH% for 15 to 30 hours are preferable as aging conditions for obtaining the unformed negative electrode plate. Conditions of a temperature of 45 to 60°C for 15 to 30 hours are preferable as drying conditions.

In the assembling step, for instance, the unformed negative electrode plate and the unformed positive electrode plate that have been produced as described above are alternately layered through a separator, and the current collecting portions of the electrodes that have the same polarity are connected (welded or the like) to a strap to obtain a polar plate group. This polar plate group is arranged in a battery case to produce a unformed battery. Next, the electrolytic solution (for instance, dilute sulfuric acid) is injected into the unformed battery, then a direct current is passed through the unformed battery to perform the formation in the battery case, and thereby the lead storage battery 1 is obtained. The lead storage battery having a predetermined specific gravity is obtained usually only by the passage of an electric current, but for the purpose of shortening the energization time, it is acceptable also to eliminate the dilute sulfuric acid once after the formation, and then to inject the electrolytic solution.

The formation conditions and the specific gravity of the sulfuric acid can be adjusted according to properties of the electrode active material. In addition, the formation treatment is not limited to being carried out after the assembly step, but may be carried out after aging and drying in the electrode manufacturing process (formation in tank).

In the above, preferred embodiment of one aspect of the present disclosure has been described, but the present disclosure is not limited to the above described embodiment.

## Examples

Next, examples of the present disclosure will be described. However, the present disclosure is not limited to the following examples.

(Example 1)

[Production of positive electrode current collector]

An expanded grid body was prepared as the positive electrode current collector, which was produced by forming a slit in a sheet-shaped lead-calcium-tin alloy (calcium content: 0.05 mass%, and tin content of 0.5 mass%), and stretching the slit so as to be expanded. The positive electrode current collector was with the width W2 of 145 mm, the height H2 of 110 mm, and the thickness of 0.9 mm.

[Production of unformed positive electrode plate]

To lead powder produced by a ball mill method, 0.07 mass% of an acrylic fiber as a short fiber for reinforcement and 0.01 mass% of sodium sulfate were added, and the resultant material was dry mixed. The amounts of the acrylic fiber and the sodium sulfate to be blended are each a blend amount based on the total mass of the lead powder. Next, 10 mass% of water and 9 mass% of dilute sulfuric acid (having specific gravity of 1.28) were added to the above described mixture containing the lead powder, and the resultant mixture was kneaded to produce a paste of the positive electrode material (The amounts of the blended water and diluted sulfuric acid are each blend amount based on the total mass of lead powder.). When the paste of the positive electrode material was produced, the dilute sulfuric acid was added step by step so as to avoid a rapid temperature rise. Subsequently, the positive electrode current collector obtained in the above description was filled with the produced paste of the positive electrode material, and was aged in an atmosphere

of a temperature of 50°C and a humidity of 98% for 24 hours. Thereby, the unformed positive electrode plate was obtained in which the positive electrode current collector was filled with the unformed positive electrode material. The unformed positive electrode plate was with the filled portion width W1 of 145 mm, the filled portion height H1 of 110 mm, and the thickness of 1.5 mm.

[Production of negative electrode current collector]

A sheet-shaped lead-calcium-tin alloy (calcium content: 0.05 mass% and tin content 0.5 mass%) having the thickness of 12 mm was prepared as a substrate, and a tin (Sn) sheet having the thickness of 0.2 mm was prepared as a metal sheet for forming the surface layer. A rolled sheet having the thickness of 0.8 mm was produced by operations of: overlapping the Sn sheet on both faces of the lead-calcium-tin alloy so that a surface layer consisting of Sn was provided at a position of the ear portion of the negative electrode current collector; and rolling the resultant sheet with a rolling roller. The thickness of the layer formed on the rolled sheet was approximately 13 μm, which became the surface layer (surface layer consisting of Sn).

The rolled sheet was expanded by a reciprocating type expander, while the position of the rolled sheet was adjusted so that the surface layer consisting of Sn was provided at the position of the ear portion of the negative electrode current collector. Thereby, the negative electrode current collector was produced in which the surface layer (thickness: 13 μm) consisting of Sn was formed on the surface of the ear portion. The negative electrode current collector was with the width W2 of 145 mm, the height H2 of 110 mm, and the thickness of 0.8 mm.

[Production of unformed negative electrode plate]

To the lead powder produced by the ball mill method, 0.1 mass% of short fiber for reinforcement (acrylic fiber), 0.2 mass% of Acetylene black and 1.0 mass% of barium sulfate were added as additives, and then the resultant material was dry mixed (where the above described blend amount is blend amount based on the total mass of lead powder). Next, 0.2 mass% of lignin sulfonate (trade name: VANILLEX N, made by Nippon Paper Industries Co., Ltd.) (blend amount, in terms of solid content of resin, based on the total mass of lead powder) and 10 mass% of water (blend amount based on the total mass of lead powder) were added to the above mixture, and then the resultant mixture was kneaded. Subsequently, the resultant mixture was kneaded while 9.5 mass% of a dilute sulfuric acid (specific gravity of 1.280) based on the total mass of the lead powder was added little by little to the above mixture, and the paste of the negative electrode material was produced. Subsequently, the negative electrode current collector obtained in the above description was filled with the produced paste of the negative electrode material, and was aged in an atmosphere of a temperature of 50°C and a humidity of 98% for 20 hours. Thereby, the unformed negative electrode plate was obtained in which the negative electrode current collector was filled with the unformed negative electrode material. The unformed negative electrode plate was with the filled portion width W1 of 145 mm, the filled portion height H1 of 110 mm, and the thickness of 1.3 mm.

[Preparation of separator]

A separator (bag-like separator) was prepared by processing the sheet-like article having a plurality of convex ribs and a base portion supporting the ribs on one surface, into a bag shape so that the surface having the ribs formed thereon came to the outside (see Figure 7 and Figure 8). The separator was with the total thickness of 0.8 mm, the thickness T of the base portion of 0.2 mm, the height H of the rib of 0.6 mm, the upper bottom width B of the rib of 0.4 mm, and the lower bottom width A of the rib of 0.8 mm.

[Assembly of battery]

The unformed negative electrode plate was accommodated in the obtained bag-like separator. Next, 7 unformed positive electrode plates and 8 unformed negative electrode plates which were each accommodated in the bag-like separator were alternately layered so that the ribs of the separators came into contact with the unformed positive electrode plates, respectively. Next, the current collecting portion of the unformed positive electrode plate and the current collecting portion of the unformed negative electrode plate were gathered and welded to a positive electrode side strap and a negative electrode side strap of the respective polarities, and the polar plate group was obtained. The thickness D1 of the polar plate group was 3.36 cm.

A battery case having six cell chambers having the respective inner dimensions A1 of 3.5 cm was prepared, and the polar plate groups were inserted into the 6 cell chambers of the battery case, respectively. Next, the polar plate groups in the cells were connected to each other, and then a lid was thermally welded to the battery case. After that, each liquid port plug was opened, and dilute sulfuric acid was injected into each cell from each liquid injection port which

is provided on the lid, as an electrolytic solution. Subsequently, the formation in the battery case was carried out by passing an electric current of 25 A, at ambient temperature of 40°C for 20 hours to have produced an 85D23 type battery (lead storage battery) which is specified in JIS D5301. The specific gravity of the electrolytic solution was adjusted to 1.28. The content of the positive electrode active material after the formation (based on the total mass of positive electrode material) was 99.9 mass%, and the content of the negative electrode active material after the formation (based on the total mass of negative electrode material) was 98.4 mass%.

The total surface area S1 of the electrode material filled portion, the apparent total volume V1, the ratio of the total surface area S1 of the electrode material filled portion to the apparent total volume V1 (S1/V1), the thickness D1 of the polar plate group, the inner dimension A1 of the cell chamber, and the ratio of the thickness D1 of the polar plate group to the inner dimension A1 of the cell chamber (D1/A1), in the lead storage battery of Example 1, are shown in Table 1.

[Measurement of specific surface area of positive electrode material and specific surface area of negative electrode material]

Measurement samples for the specific surface areas were produced according to the following procedure. First, the formed battery was disassembled, the electrode plates (positive electrode plate and negative electrode plate) were taken out, were washed with water, and then were dried at 50°C for 24 hours. Next, 2 g of each of the electrode materials (positive electrode material and negative electrode material) was collected from the center portion of the above described electrode plate, and was dried at 130°C for 30 minutes; and the measurement samples were produced.

While the measurement sample which was prepared in the above description was cooled with liquid nitrogen, the amount of adsorbed nitrogen gas was measured at a liquid nitrogen temperature according to a multipoint method, and the specific surface areas of the positive electrode material and the negative electrode material after the formation were calculated according to the BET method. The measurement conditions were as follows. As a result of having measured the measurement samples in this manner, the specific surface area of the positive electrode material was 6.3 $m^2/g$ and the specific surface area of the negative electrode material was 0.5 $m^2/g$.

{Measurement condition of specific surface area}

Apparatus: HM-2201FS (made by Macsorb Co., Ltd.)
Deaeration time: 10 minutes at 130°C
Cooling: by liquid nitrogen for 4 minutes
Flow rate of adsorption gas: 25 mL/min

[Calculation of ratio of mass p1 of positive electrode material to mass nl of negative electrode material (p1/n1)]

The p1/n1 was calculated in the following way. First, the positive electrode plate after the formation was taken out from the battery case, was washed with water for 1 hour, and then was dried at 80°C for 24 hours in the air atmosphere. After the mass of the positive electrode plate was measured, the positive electrode material was taken out from the positive electrode plate, and the mass of the positive electrode current collector was determined. The total mass of the positive electrode material was calculated from an amount which was obtained by excluding the mass of the positive electrode current collector from the mass of the positive electrode plate. The total mass of the negative electrode material also in the negative electrode plate was calculated in a similar way, except that the drying was carried out under a nitrogen atmosphere. The p1/n1 was determined from the total mass of the positive electrode material and the total mass of the negative electrode material per single cell. The p1/n1 was 1.15.

(Example 2)

A lead storage battery of Example 2 was produced in a similar way to that in Example 1 (see Table 1), except that instead of the 85D23 type battery, an 85D26 type battery (lead storage battery) which is specified in JIS D5301 was produced. The inner dimension A1 of the 85D26 type battery is 3.9 cm. The content of the positive electrode active material after the formation (based on the total mass of positive electrode material), the content of the negative electrode active material after the formation, the specific surface area of the positive electrode material, and the specific surface area of the negative electrode material were the same as those in Example 1.

(Examples 3 and 4, and Comparative Examples 1 to 4)

In Examples 3 and 4 and Comparative Examples 1 to 4, the filling amounts of the positive electrode material and the negative electrode material were adjusted, and the numbers of the positive electrode plates and the negative electrode plates which were used in the polar plate group were changed; and thereby the total surface area S1 of the electrode material filled portion, the apparent total volume VI, the ratio of the total surface area S1 of the electrode material filled portion to the apparent total volume V1 (S1/V1), the thickness D1 of the polar plate group, the inner dimension A1 of the cell chamber, and the ratio of the thickness D1 of the polar plate group to the inner dimension A1 of the cell chamber (D1/A1) were adjusted to values shown in Table 1. The lead storage batteries of Examples 3 and 4 and Comparative Examples 1 to 4 were each produced in a similar way to that in Example 1 except for the above description. Accordingly, the content of the positive electrode active material after the formation (based on the total mass of positive electrode material), the content of the negative electrode active material after the formation, the specific surface area of the positive electrode material, the specific surface area of the negative electrode material, and the ratio of the mass p1 of the positive electrode material to the mass nl of the negative electrode material (p1/n1) were the same as those in Example 1. In addition, in Example 3, 8 positive electrode plates and 8 negative electrode plates were used per polar plate group. In Example 4, 8 positive electrode plates and 9 negative electrode plates were used per polar plate group. In Comparative Examples 1 and 2, 5 positive electrode plates and 6 negative electrode plates were used per polar plate group. In Comparative Examples 3 and 4, 6 positive electrode plates and 7 negative electrode plates were used per polar plate group.

(Examples 5 to 13 and 15 to 21)

The lead storage batteries of Examples 5 to 13 and 15 to 21 were produced in a similar way to that in Example 1, except that the lignin sulfonate (resin having a sulfone group and/or a sulfonate group (negative electrode organic additive in Table 2)) and Acetylene black (carbonaceous material), in the preparation of the unformed negative electrode plate, aluminum (Al) ion concentration in the electrolytic solution, the specific gravity of the electrolytic solution, and the p1/n1 were changed or adjusted as shown in Table 2. In the lead storage batteries in Examples 5 to 13 and 15 to 21, the content of the positive electrode active material after the formation (based on the total mass of positive electrode material), the content of the negative electrode active material after the formation, the specific surface area of the positive electrode material, the specific surface area of the negative electrode material, the total surface area S1 of the electrode material filled portion, the apparent total volume VI, the ratio of the total surface area S1 of the electrode material filled portion to the apparent total volume V1 (S1/V1), the thickness D1 of the polar plate group, the inner dimension A1 of the cell chamber, and the ratio of the thickness D1 of the polar plate group to the inner dimension A1 of the cell chamber (D1/A1) were the same as those in Example 1. Incidentally, details of a bisphenol-based resin, Ketjen black and scaly graphite in Table 2 are as follows.

- Bisphenol-based resin: condensate of bisphenol, aminobenzenesulfonic acid and formaldehyde (trade name: VISPERSE P215, made by Nippon Paper Industries Co., Ltd.; blend amount: 0.2 parts by mass in terms of resin solid content)
- Ketjen black: made by Lion Corporation, trade name "Carbon ECP600JD", 0.2 parts by mass
- Scaly graphite: average primary particle size 180 μm, 1.6 parts by mass

(Example 14)

A lead storage battery in Example 14 was produced (see Table 2) in a similar way to that in Example 1, except that a nonwoven fabric was provided on the surface of the separator so that a surface opposing to the negative electrode plate of the separator was composed of a nonwoven fabric, and the height H of the ribs of the separator was adjusted so that the thickness D1 of the polar plate group became the same value as the thickness D1 of the polar plate group in Example 1. Incidentally, a nonwoven fabric made of glass fiber (made by Japan vilene company Ltd., thickness: 0.1 mm, basis weight: 40 g/m$^2$) was used as the nonwoven fabric. In the lead storage battery of Example 14, the content of the positive electrode active material after the formation (based on the total mass of positive electrode material), the content of the negative electrode active material after the formation, the specific surface area of the positive electrode material, the specific surface area of the negative electrode material, the total surface area S1 of the electrode material filled portion, the apparent total volume V1, the ratio of the total surface area S1 of the electrode material filled portion to the apparent total volume V1 (S1/V1), the thickness D1 of the polar plate group, the inner dimension A1 of the cell chamber, and the ratio of the thickness D1 of the polar plate group to the inner dimension A1 of the cell chamber (D1/A1) were the same as those in Example 1.

(Comparative Example 5)

A lead storage battery of Comparative Example 5 was produced in a similar way to that in Example 1, except that the expand grid body similar to the positive electrode current collector was used for the negative electrode current collector (see Table 1). The content of the positive electrode active material after the formation (based on the total mass of positive electrode material), the content of the negative electrode active material after the formation, the specific surface area of the positive electrode material, and the specific surface area of the negative electrode material were the same as those in Example 1.

<Evaluation of battery characteristics>

Concerning the lead storage batteries of Examples and Comparative Examples, charge acceptability, low-temperature high-rate discharge performance, ISS cycle characteristics and liquid reduction performance were evaluated in the following way. The results are shown in Table 1, Table 2 and Table 3. Incidentally, the low-temperature high-rate discharge performance was evaluated only for Examples 1 and 5 to 21, and the liquid reduction performance was evaluated only for Example 1 and Comparative Example 5.

[Charge acceptability]

The produced lead storage batteries were subjected to constant current discharging on conditions of 10.4 A and 25°C for 30 minutes, and were left for 12 hours. After that, the lead storage battery was charged at a constant voltage of 14.0 V for 60 seconds under a limited current of 100 A, and the current value was measured after 5 seconds after the start of charge. The charge acceptability was evaluated by a procedure of comparing this current value. Incidentally, the charge acceptability was relatively evaluated assuming that the measurement result of Example 1 was 100.

[Low-temperature high-rate discharge performance]

After the battery temperature of the prepared lead storage battery has been adjusted to -15°C, the constant current discharging was carried out at 300 A at -15°C, and the discharge duration time until the cell voltage fell below 6.0 V was measured. The low-temperature high-rate discharge performance was evaluated by a procedure of comparing the discharge duration times. Incidentally, the low-temperature high-rate discharge performance was relatively evaluated assuming that the measurement result of Example 1 was 100.

[ISS cycle characteristic]

The ambient temperature was adjusted so that the battery temperature became 25°C. An operation of carrying out the constant current discharging at 45 A for 59 seconds and the constant current discharging at 300 A for 1 second and then carrying out the constant current / constant voltage charging at 100 A at 2.33 V for 60 seconds was determined to be 1 cycle, and such a cycle test was carried out that the battery was left for 40 hours after every 3600 cycles and the cycle was restarted. This test is a cycle test which simulates the way how the lead storage battery is used in an ISS vehicle. In this cycle test, the charge amount is small with respect to the discharge amount, and if the charge is not completely performed, the charge becomes gradually insufficient. As a result, the 1 second voltage gradually decreases at the time when the battery was discharged for one second at the discharge current set at 300 A. Specifically, when the negative electrode is polarized during the constant current / constant voltage charging, and the charging method is switched to the constant voltage charging at an early stage, the charging current decays and the charge becomes insufficient. In this life test, the time when the 1 second voltage at the time when the battery was discharged at 300 A fell below 7.2 V was determined as the lifetime of the battery, and the ISS cycle characteristics were evaluated by a procedure of comparing the number of cycles, which was performed before the lifetime. Incidentally, the ISS cycle characteristics were relatively evaluated assuming that the measurement result of Example 1 was 100.

[Liquid reduction performance]

The liquid reduction performance was evaluated in the following way. The battery temperature was adjusted to 60°C, and the constant voltage charging was carried out at 14.4 V for 42 days (1008 hours). The liquid reduction amount was defined to be a difference between the battery weight right before the constant voltage charging was carried out after the battery temperature reached 60°C and the battery weight right after the constant voltage charging for 42 days ended, and the liquid reduction performance was evaluated by a procedure of comparing the amount. Incidentally, the liquid reduction performance was relatively evaluated assuming that the liquid reduction amount in Comparative Example 5 was 100.

[Table 1]

| | Surface layer of negative electrode ear portion | S1 ($cm^2$) | V1 ($cm^3$) | S1/V1 ($cm^{-1}$) | D1 (cm) | A1 (cm) | D1/A1 | Charge acceptability | ISS cycle characteristics |
|---|---|---|---|---|---|---|---|---|---|
| Example 1 | Sn | 4785 | 536 | 8.93 | 3.36 | 3.50 | 0.96 | 100 | 100 |
| Example 2 | Sn | 4785 | 536 | 8.93 | 3.36 | 3.90 | 0.86 | 100 | 100 |
| Example 3 | Sn | 5104 | 536 | 9.52 | 3.36 | 3.50 | 0.96 | 100 | 110 |
| Example 4 | Sn | 5423 | 536 | 10.12 | 3.36 | 3.50 | 0.96 | 110 | 120 |
| Comparative Example 1 | Sn | 3509 | 536 | 6.55 | 3.36 | 3.50 | 0.96 | 75 | 80 |
| Comparative Example 2 | Sn | 3509 | 397 | 8.84 | 2.49 | 3.50 | 0.71 | 75 | 80 |
| Comparative Example 3 | Sn | 4147 | 536 | 7.74 | 3.36 | 3.50 | 0.96 | 85 | 90 |
| Comparative Example 4 | Sn | 4147 | 467 | 8.87 | 2.93 | 3.50 | 0.84 | 85 | 90 |
| Comparative Example 5 | None | 4785 | 536 | 8.93 | 3.36 | 3.50 | 0.96 | 100 | 70 |

[Table 2]

| | p1/n1 | Negative electrode organic additive | Aluminum Ion concentration (mol/L) | Specific gravity of electrolytic solution | Carbonaceous material | Nonwoven fabric | Charge acceptable ty | Low-temperat ure high-rate discharge performance | ISS cycle characteristics |
|---|---|---|---|---|---|---|---|---|---|
| Example 1 | 1.15 | Lignin sulfonate | - | 1.28 | Acetyne back | - | 100 | 100 | 100 |
| Example 5 | 1.15 | Bisphenol-based resin | - | 1.28 | Acetylene black | - | 130 | 80 | 130 |
| Example 6 | 1.15 | Lignin sulfonate | 0.04 | 1.28 | Acetylene black | - | 110 | 95 | 110 |
| Example 7 | 1.15 | Lignin sulfonate | 0.10 | 1.28 | Acetylene black | - | 120 | 90 | 120 |
| Example 8 | 1.15 | Lignin sulfonate | 0.14 | 1.28 | Acytylene black | - | 130 | 85 | 130 |
| Example 9 | 1.15 | Lignin sulfonate | - | 1.25 | Acetylene black | - | 120 | 90 | 120 |
| Example 10 | 1.15 | Lignin sulfonate | - | 1.29 | Acetylene black | - | 95 | 105 | 95 |
| Example 11 | 1.15 | Bisphenol-based resin | 0.10 | 1.25 | Acetylene black | - | 150 | 70 | 150 |
| Example 12 | 1.15 | Lignin sulfonate | - | 1.28 | Ketjen black | - | 110 | 90 | 100 |
| Example 13 | 1.15 | Lignin sulfonate | - | 1.28 | Scaly graphite | - | 100 | 100 | 120 |
| Example 14 | 1.15 | Lignin sulfonate | - | 1.28 | Acetylene black | Present | 95 | 95 | 130 |
| Example 15 | 1.25 | Lignin sulfonate | - | 1.28 | Acetylene black | - | 100 | 100 | 110 |
| Example 16 | 1.35 | Lignin sulfone | - | 1.28 | Acetylene black | - | 100 | 100 | 115 |

(continued)

| | p1/n1 | Negative electrode organic additive | Aluminum Ion concentration (mol/L) | Specific gravity of electrolytic solution | Carbonaceous material | Nonwoven fabric | Charge acceptable ty | Low-temperat ure high-rate discharge performance | ISS cycle characteristics |
|---|---|---|---|---|---|---|---|---|---|
| Example 17 | 1.40 | Lignin sulfonate | - | 1.28 | Acetyene black | - | 100 | 100 | 125 |
| Example 18 | 1.35 | Bisphenol-based resin | - | 1.28 | Acetylene black | - | 130 | 80 | 145 |
| Example 19 | 1.35 | Ligin sulfonate | 0.10 | 1.28 | Acetylene black | - | 120 | 90 | 135 |
| Example 20 | 1.35 | Lignin sulfonate | - | 1.25 | Acetylene black | - | 120 | 90 | 135 |
| Example 21 | 1.35 | Bisphenol-based resin | 0.10 | 1.25 | Acetylene black | - | 150 | 70 | 165 |

[Table 3]

| | Surface layer of negative electrode ear portion | p1/n1 | Negative electrode organic additive | Aluminum ion concentration (mol/L) | Specific gravity of electrolytic solution | Carbonaceous material | Nonwoven fabric | Liquid reduction performance |
|---|---|---|---|---|---|---|---|---|
| Comparative Example 5 | None | 1.15 | Lignin sulfonate | - | 1.28 | Acetylene black | - | 100 |
| Example 1 | Sn | 1.15 | Lignin sulfonate | - | 1.28 | Acetylene black | - | 89 |

**Reference Signs List**

1 ... Lead storage battery, 2 ... Battery case, 11 ... Polar plate group, 12 ... Positive electrode plate, 13 ... Negative electrode plate, 14 ... Bag-like separator, 15 ... Positive electrode side strap, 16 ... Negative electrode side strap, 21 ... Positive electrode current collector, 22 ... Current collecting portion of positive electrode (Positive electrode ear portion), 23 ... Positive electrode material, 24 ... Positive electrode material filled portion, 31 ... Negative electrode current collector, 32 ... Current collecting portion of negative electrode (Negative electrode ear portion), 32a ... Surface layer, 33 ... Negative electrode material, 34 ... Negative electrode material filled portion, 40 ... Separator, 45 ... Mechanically sealed portion, 52 ... Cell chamber, 53 ... Rib.

**Claims**

1. A lead storage battery (1) comprising:

   a battery case (2) comprising a cell chamber (52);
   a polar plate group (11) provided in the cell chamber (52) and comprising a separator (40), a positive electrode plate (12) and a negative electrode plate (13), the positive electrode plate (12) and the negative electrode plate (13) being alternately stacked with the separator (40) disposed therebetween; and
   an electrolytic solution accommodated in the cell chamber (52), wherein
   the positive electrode plate (12) comprises a positive electrode material filled portion (24) comprised of a positive electrode material (23), a positive electrode current collector (21) supporting the positive electrode material filled portion (24), and a positive electrode ear portion (22) provided on an upper peripheral portion of the current collector (21);
   the negative electrode plate (13) comprises a negative electrode material filled portion (34) comprised of a negative electrode material (33), a negative electrode current collector (31) supporting the negative electrode material filled portion (34), and a negative electrode ear portion (32) provided on an upper peripheral portion of the current collector (31);
   the negative electrode ear portion (32) comprises a surface layer (32a) comprising Sn in an amount of 50 parts by mass or more, based on 100 parts by mass of the surface layer (32a);
   when a total surface area of the positive electrode material filled portion (24) and the negative electrode material filled portion (34) is represented by S1 and an apparent total volume of the positive electrode material filled portion (24) and the negative electrode material filled portion (34) is represented by VI, S1/V1 is 8.9 $cm^{-1}$ or larger,
   the total surface area S1 is expressed by the following expression (a):

   $$\text{total surface area S1} = (\text{filled portion width W1} \times \text{filled portion height H1}) \times 2 \times \text{number N1 of electrodes} \qquad (a)$$

   wherein W1 is the width of the electrode material filled portion, H1 is the height of the electrode material filled portion, and N1 is the number of electrodes in the polar plate group (11), and
   the apparent total volume V1 is expressed by the following expression (b):

   $$\text{apparent total volume V1} = \text{filled portion width W1} \times \text{filled portion height H1} \times \text{thickness D1 of polar plate group} \qquad (b)$$

   wherein W1 and H1 are as defined above, and D1 is the thickness of the polar plate group (11).

2. The lead storage battery according to claim 1, wherein the surface layer consists of Sn.

3. The lead storage battery according to claim 1 or 2, wherein a ratio of a mass p1 of the positive electrode material to a mass nl of the negative electrode material, p1/n1, is 1.15 or larger.

4. The lead storage battery according to claim 3, wherein the positive electrode material comprises a positive electrode active material, the negative electrode material comprises a negative electrode active material, a content of the

positive electrode active material with respect to the mass p1 of the positive electrode material is 95 mass% or more, and a content of the negative electrode active material with respect to the mass nl of the negative electrode material is 93 mass% or more.

**5.** The lead storage battery according to any one of claims 1 to 4, wherein the negative electrode material comprises a resin comprising a sulfone group and/or a sulfonate group.

**6.** The lead storage battery according to claim 5, wherein the resin comprising a sulfone group and/or a sulfonate group is a bisphenol-based resin.

**7.** The lead storage battery according to claim 6, wherein the bisphenol-based resin is a condensate of bisphenol, aminobenzenesulfonic acid and formaldehyde.

**8.** The lead storage battery according to any one of claims 1 to 7, wherein the electrolytic solution comprises aluminum ions.

**9.** The lead storage battery according to claim 8, wherein a concentration of the aluminum ions is 0.02 to 0.14 mol/L.

**10.** The lead storage battery according to any one of claims 1 to 9, wherein the negative electrode material comprises a carbonaceous material.

**11.** The lead storage battery according to claim 10, wherein the carbonaceous material is Ketjen black or scaly graphite.

**12.** The lead storage battery according to any one of claims 1 to 11, wherein the polar plate group comprises a nonwoven fabric between the negative electrode plate and the separator, and the negative electrode plate and the nonwoven fabric come into contact with each other.

**13.** The lead storage battery according to claim 12, wherein the nonwoven fabric is a nonwoven fabric consisting of at least one fiber selected from the group consisting of glass fiber, polyolefin-based fiber, and fiber made of pulp.

**14.** The lead storage battery according to any one of claims 1 to 13, wherein a specific surface area of the positive electrode material is 4 $m^2/g$ or larger as measured by means of BET method.

**15.** The lead storage battery according to any one of claims 1 to 14, wherein a specific surface area of the negative electrode material is 0.4 $m^2/g$ or larger as measured by means of BET method.

**16.** The lead storage battery according to any one of claims 1 to 15, wherein a specific gravity of the electrolytic solution is 1.25 to 1.29.

**17.** The lead storage battery according to any one of claims 1 to 16, wherein when a thickness of the polar plate group is represented by D1 and an inner dimension of the cell chamber in a stack direction of the polar plate group is represented by A1, D1/A1 is 0.85 or larger.

**18.** The lead storage battery according to any one of claims 1 to 17, wherein
the separator comprises a rib and a base portion supporting the rib; and
a thickness of the base portion is 0.3 mm or smaller, and
a height of the rib is 0.6 mm or smaller.

## Patentansprüche

**1.** Bleiakkumulator (1), umfassend:

ein Batteriegehäuse (2), das eine Zellenkammer (52), umfasst;
eine Polarplattengruppe (11), die sich in der Zellenkammer (52) befindet und einen Separator (40), eine positive Elektrodenplatte (12) und eine negative Elektrodenplatte (13) umfasst, wobei die positive Elektrodenplatte (12) und die negative Elektrodenplatte (13) abwechselnd mit dem dazwischengelagerten Separator (40) gestapelt sind, und

eine elektrolytische Lösung, die in der Zellenkammer (52) untergebracht ist, wobei
die positive Elektrodenplatte (12) einen mit positivem Elektrodenmaterial gefüllten Abschnitt (24), der ein positives Elektrodenmaterial (23) umfasst, einen positiven Elektrodenstromableiter (21), der den mit dem positiven Elektrodenmaterial gefüllten Abschnitt (24) trägt, und einen positiven Elektrodenohrabschnitt (22), der sich an einem oberen Umfangsabschnitt des Stromableiters (21) befindet, umfasst,
die negative Elektrodenplatte (13) einen mit negativem Elektrodenmaterial gefüllten Abschnitt (34), der ein negatives Elektrodenmaterial (33) umfasst, einen negativen Elektrodenstromableiter (31), der den mit dem negativen Elektrodenmaterial gefüllten Abschnitt (34) trägt, und einen negativen Elektrodenohrabschnitt (32), der sich an einem oberen Umfangsabschnitt des Stromableiters (31) befindet, umfasst,
der negative Elektrodenohrabschnitt (32) eine Oberflächenschicht (32a) umfasst, die Sn in einer Menge von 50 Masseteilen oder mehr bezogen auf 100 Masseteile der Oberflächenschicht (32a) umfasst,
wenn eine Gesamtoberfläche des mit dem positiven Elektrodenmaterial gefüllten Abschnitts (24) und des mit dem negativen Elektrodenmaterial gefüllten Abschnitts (34) durch S1 dargestellt wird und ein scheinbares Gesamtvolumen des mit dem positiven Elektrodenmaterial gefüllten Abschnitts (24) und des mit dem negativen Elektrodenmaterial gefüllten Abschnitts (34) durch V1 dargestellt wird, S1/V1 8,9 $cm^{-1}$ oder größer ist,
die Gesamtoberfläche S1 durch den folgenden Ausdruck (a) ausgedrückt wird:

$$\text{Gesamtoberfläche } S1 = (\text{Breite des gefüllten Abschnitts } W1 \times \text{Höhe des gefüllten Abschnitts } H1) \times 2 \times \text{Zahl } N1 \text{ der Elektroden} \qquad (a)$$

worin W1 die Breite des mit dem Elektrodenmaterial gefüllten Abschnitts ist, H1 die Höhe des mit dem Elektrodenmaterial gefüllten Abschnitts ist und N1 die Zahl der Elektroden in der Polarplattengruppe (11) ist, und
das scheinbare Gesamtvolumen V1 durch den folgenden Ausdruck (b) ausgedrückt wird:

$$\text{scheinbares Gesamtvolumen } V1 = \text{Breite des gefüllten Abschnitts } W1 \times \text{Höhe des gefüllten Abschnitts } H1 \times \text{Dicke } D1 \text{ der Polarplattengruppe} \qquad (b)$$

worin W1 und H1 wie oben definiert sind und D1 die Dicke der Polarplattengruppe (11) ist.

**2.** Bleiakkumulator gemäß Anspruch 1, wobei die Oberflächenschicht aus Sn besteht.

**3.** Bleiakkumulator gemäß Anspruch 1 oder 2, wobei das Verhältnis einer Masse p1 des positiven Elektrodenmaterials zu einer Masse n1 des negativen Elektrodenmaterials, p1/n1, 1,15 oder größer ist.

**4.** Bleiakkumulator gemäß Anspruch 3, wobei das positive Elektrodenmaterial ein positives Elektrodenaktivmaterial umfasst, das negative Elektrodenmaterial ein negatives Elektrodenaktivmaterial umfasst, ein Gehalt des positiven Elektrodenaktivmaterials in Bezug auf die Masse p1 des positiven Elektrodenmaterials 95 Masse-% oder mehr beträgt und ein Gehalt des negativen Elektrodenaktivmaterials in Bezug auf die Masse n1 des negativen Elektrodenmaterials 93 Masse-% oder mehr beträgt.

**5.** Bleiakkumulator gemäß irgendeinem der Ansprüche 1 bis 4, wobei das negative Elektrodenmaterial ein Harz umfasst, das eine Sulfongruppe und/oder Sulfonatgruppe umfasst.

**6.** Bleiakkumulator gemäß Anspruch 5, wobei das Harz, das eine Sulfongruppe und/oder eine Sulfonatgruppe umfasst, ein Bisphenol-basiertes Harz ist.

**7.** Bleiakkumulator gemäß Anspruch 6, wobei das Bisphenolbasierte Harz ein Kondensat von Bisphenol, Aminobenzolsulfonsäure und Formaldehyd ist.

**8.** Bleiakkumulator gemäß irgendeinem der Ansprüche 1 bis 7, wobei die elektrolytische Lösung Aluminiumionen umfasst.

9. Bleiakkumulator gemäß Anspruch 8, wobei eine Konzentration der Aluminiumionen 0,02 bis 0,14 mol/l beträgt.

10. Bleiakkumulator gemäß irgendeinem der Ansprüche 1 bis 9, wobei das negative Elektrodenmaterial ein Kohlenstoffhaltiges Material umfasst.

11. Bleiakkumulator gemäß Anspruch 10, wobei das Kohlenstoff-haltige Material Ketjen-Ruß oder schuppenförmiges Graphit ist.

12. Bleiakkumulator gemäß irgendeinem der Ansprüche 1 bis 11, wobei die Polarplattengruppe einen Vliesstoff zwischen der negativen Elektrodenplatte und dem Separator umfasst und die negative Elektrodenplatte und der Vliesstoff in Kontakt miteinander kommen.

13. Bleiakkumulator gemäß Anspruch 12, wobei der Vliesstoff ein Vliesstoff ist, der aus mindestens einer Faser, ausgewählt aus der Gruppe, bestehend aus Glasfaser, Polyolefin-basierter Faser und Faser aus Zellstoff, ist.

14. Bleiakkumulator gemäß irgendeinem der Ansprüche 1 bis 13, wobei eine spezifische Oberfläche des positiven Elektrodenmaterials 4 $m^2/g$ oder größer, gemessen durch das BET-Verfahren, ist.

15. Bleiakkumulator gemäß irgendeinem der Ansprüche 1 bis 14, wobei eine spezifische Oberfläche des negativen Elektrodenmaterials 0,4 $m^2/g$ oder größer, gemessen durch das BET-Verfahren, ist.

16. Bleiakkumulator gemäß irgendeinem der Ansprüche 1 bis 15, wobei ein spezifisches Gewicht der elektrolytischen Lösung 1,25 bis 1,29 beträgt.

17. Bleiakkumulator gemäß irgendeinem der Ansprüche 1 bis 16, wobei, wenn eine Dicke der Polarplattengruppe als D1 dargestellt wird und ein Innenmaß der Zellenkammer in einer Stapelrichtung der Polarplattengruppe als A1 dargestellt wird, D1/A1 0,85 oder größer ist.

18. Bleiakkumulator gemäß irgendeinem der Ansprüche 1 bis 17, wobei
der Separator eine Rippe und einen Basisabschnitt, der die Rippe trägt, umfasst und
eine Dicke des Basisabschnitts 0,3 mm oder kleiner ist und
eine Höhe der Rippe 0,6 mm oder kleiner ist.

## Revendications

1. Accumulateur au plomb (1) comprenant :

un bac d'accumulateur (2) comprenant une chambre de cellule (52) ;
un groupe de plaques polaires (11) prévu dans la chambre de cellule (52) et comprenant un séparateur (40), une plaque d'électrode positive (12) et une plaque d'électrode négative (13), la plaque d'électrode positive (12) et la plaque d'électrode négative (13) étant empilées en alternance avec le séparateur (40) disposé entre celles-ci ; et
une solution électrolytique logée dans la chambre de cellule (52), dans laquelle :

la plaque d'électrode positive (12) comprend une partie remplie de matériau d'électrode positive (24) consistant en un matériau d'électrode positive (23), un collecteur de courant d'électrode positive (21) supportant la partie remplie de matériau d'électrode positive (24) et une partie languette d'électrode positive (22) prévue sur une partie périphérique supérieure du collecteur de courant (21) ;
la plaque d'électrode négative (13) comprend une partie remplie de matériau d'électrode négative (34) consistant en un matériau d'électrode négative (33), un collecteur de courant d'électrode négative (31) supportant la partie remplie de matériau d'électrode négative (34) et une partie languette d'électrode négative (32) prévue sur une partie périphérique supérieure du collecteur de courant (31) ;
la partie languette d'électrode négative (32) comprend une couche de surface (32a) comprenant du Sn en une quantité de 50 parties en masse ou plus, sur la base de 100 parties en masse de la couche de surface (32a) ;
lorsqu'une surface superficielle totale de la partie remplie de matériau d'électrode positive (24) et de la partie remplie de matériau d'électrode négative (34) est représentée par S1 et un volume total apparent

de la partie remplie de matériau d'électrode positive (24) et de la partie remplie de matériau d'électrode négative (34) est représenté par V1, S1/V1 est égal ou supérieur à 8,9 $cm^{-1}$,
la surface superficielle totale S1 est exprimée par l'expression suivante (a) :

surface superficielle totale S1 = (largeur de partie remplie W1 X hauteur de partie remplie H1) x 2 x nombre N1 d'électrodes (a)

dans lequel W1 est la largeur de la partie remplie de matériau d'électrode, H1 est la hauteur de la partie remplie de matériau d'électrode, et N1 est le nombre d'électrodes dans le groupe de plaques polaires (11), et
le volume total apparent V1 est exprimé par l'expression suivante (b) :

volume total apparent V1 = largeur de partie remplie W1 X hauteur de partie remplie H1 x épaisseur D1 de groupe de plaques polaires (b)

dans lequel W1 et H1 sont telles que définies ci-dessus, et D1 est l'épaisseur du groupe de plaques polaires (11).

**2.** Accumulateur au plomb selon la revendication 1, dans lequel la couche de surface est constituée de Sn.

**3.** Accumulateur au plomb selon la revendication 1 ou 2, dans lequel le rapport d'une masse p1 du matériau d'électrode positive sur une masse n1 du matériau d'électrode négative, p1/n1, est supérieur ou égal à 1,15.

**4.** Accumulateur au plomb selon la revendication 3, dans lequel le matériau d'électrode positive comprend un matériau actif d'électrode positive, le matériau d'électrode négative comprend un matériau actif d'électrode négative, une teneur en matériau actif d'électrode positive par rapport à la masse p1 du matériau d'électrode positive est de 95 % en masse ou plus, et une teneur en matériau actif d'électrode négative par rapport à la masse n1 du matériau d'électrode négative est de 93 % en masse ou plus.

**5.** Accumulateur au plomb selon l'une quelconque des revendications 1 à 4, dans lequel le matériau d'électrode négative comprend une résine comprenant un groupe sulfone et/ou un groupe sulfonate.

**6.** Accumulateur au plomb selon la revendication 5, dans lequel la résine comprenant un groupe sulfone et/ou un groupe sulfonate est une résine à base de bisphénol.

**7.** Accumulateur au plomb selon la revendication 6, dans lequel la résine à base de bisphénol est un condensat de bisphénol, d'acide aminobenzènesulfonique et de formaldéhyde.

**8.** Accumulateur au plomb selon l'une quelconque des revendications 1 à 7, dans lequel la solution électrolytique comprend des ions aluminium.

**9.** Accumulateur au plomb selon la revendication 8, dans lequel la concentration des ions aluminium est comprise entre 0,02 et 0,14 mol/L.

**10.** Accumulateur au plomb selon l'une quelconque des revendications 1 à 9, dans lequel le matériau d'électrode négative comprend un matériau carboné.

**11.** Accumulateur au plomb selon la revendication 10, dans lequel le matériau carboné est du noir de Ketjen ou du graphite squameux.

**12.** Accumulateur au plomb selon l'une quelconque des revendications 1 à 11, dans lequel le groupe de plaques polaires comprend un tissu non tissé entre la plaque d'électrode négative et le séparateur, et la plaque d'électrode négative et le tissu non tissé viennent en contact l'un avec l'autre.

**13.** Accumulateur au plomb selon la revendication 12, dans lequel le tissu non-tissé est un tissu non-tissé constitué d'au moins une fibre choisie dans le groupe constitué d'une fibre de verre, d'une fibre à base de polyoléfine et d'une fibre de pâte.

**14.** Accumulateur au plomb selon l'une quelconque des revendications 1 à 13, dans lequel une surface superficielle spécifique du matériau d'électrode positive est de 4 $m^2/g$ ou plus, telle que mesurée au moyen d'un procédé BET.

**15.** Accumulateur au plomb selon l'une quelconque des revendications 1 à 14, dans lequel une surface superficielle spécifique du matériau d'électrode négative est égale ou supérieure à 0,4 $m^2/g$, mesurée au moyen d'un procédé BET.

**16.** Accumulateur au plomb selon l'une quelconque des revendications 1 à 15, dans lequel une densité de la solution électrolytique est de 1,25 à 1,29.

**17.** Accumulateur au plomb selon l'une quelconque des revendications 1 à 16, dans lequel lorsqu'une épaisseur du groupe de plaques polaires est représentée par D1 et une dimension interne de la chambre de cellule dans une direction d'empilement du groupe de plaques polaires est représentée par A1, D1/A1 est égal ou supérieur à 0,85.

**18.** Accumulateur au plomb selon l'une quelconque des revendications 1 à 17, dans lequel
le séparateur comprend une nervure et une partie de base supportant la nervure ; et
une épaisseur de la partie de base est égale ou inférieure à 0,3 mm, et
la hauteur de la nervure est de 0,6 mm ou moins.

Fig.1

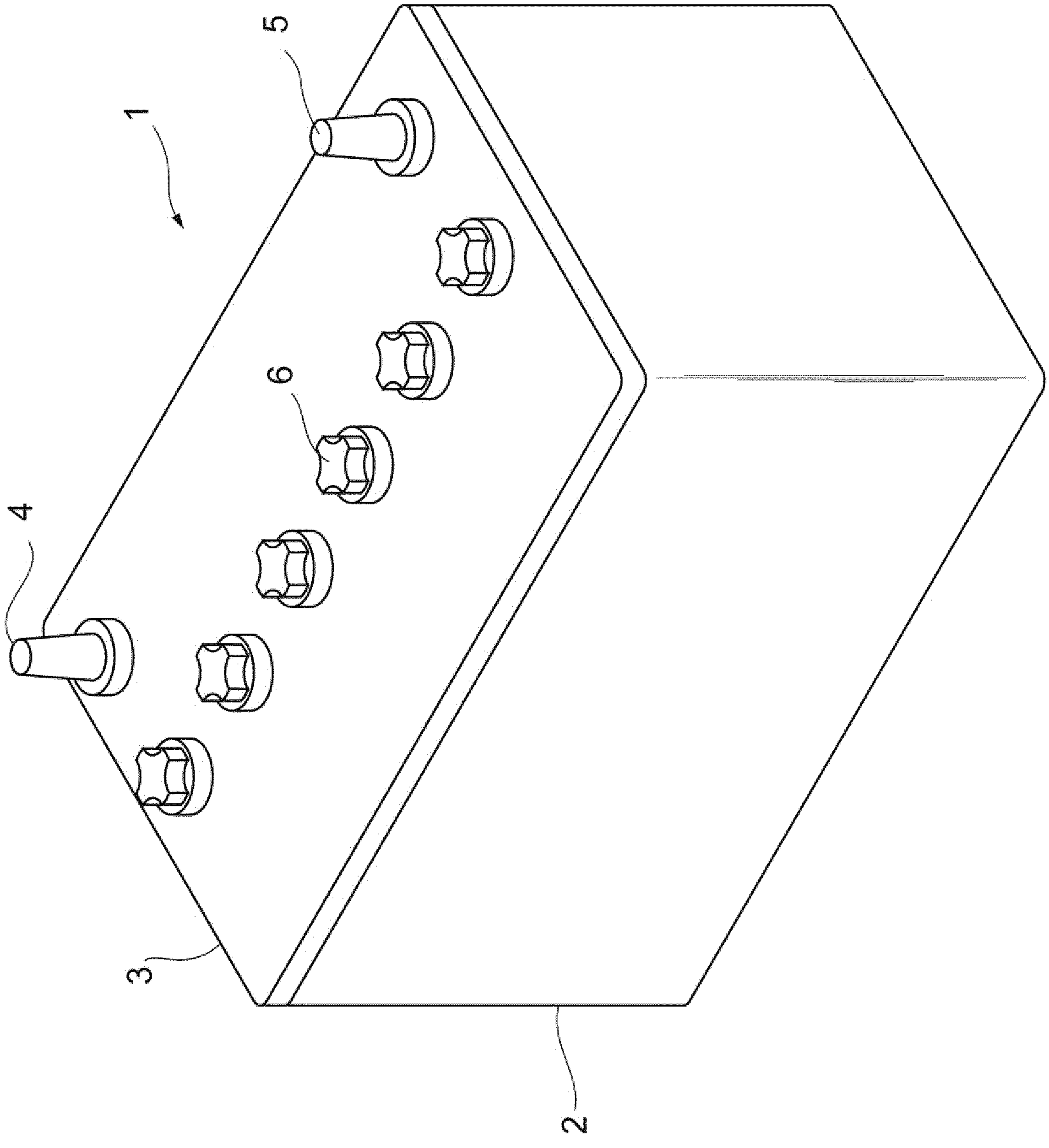

***Fig.2***

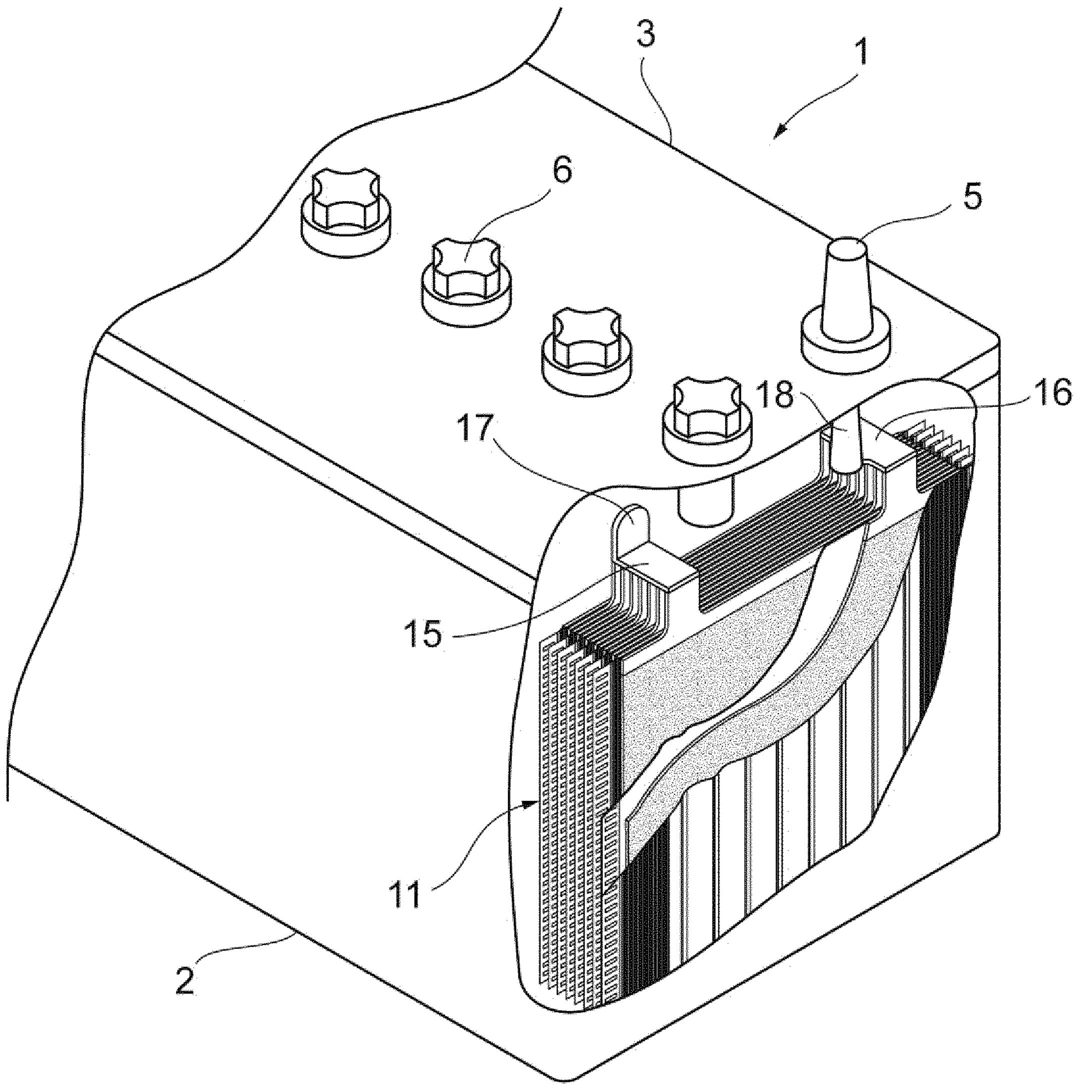

Fig.3

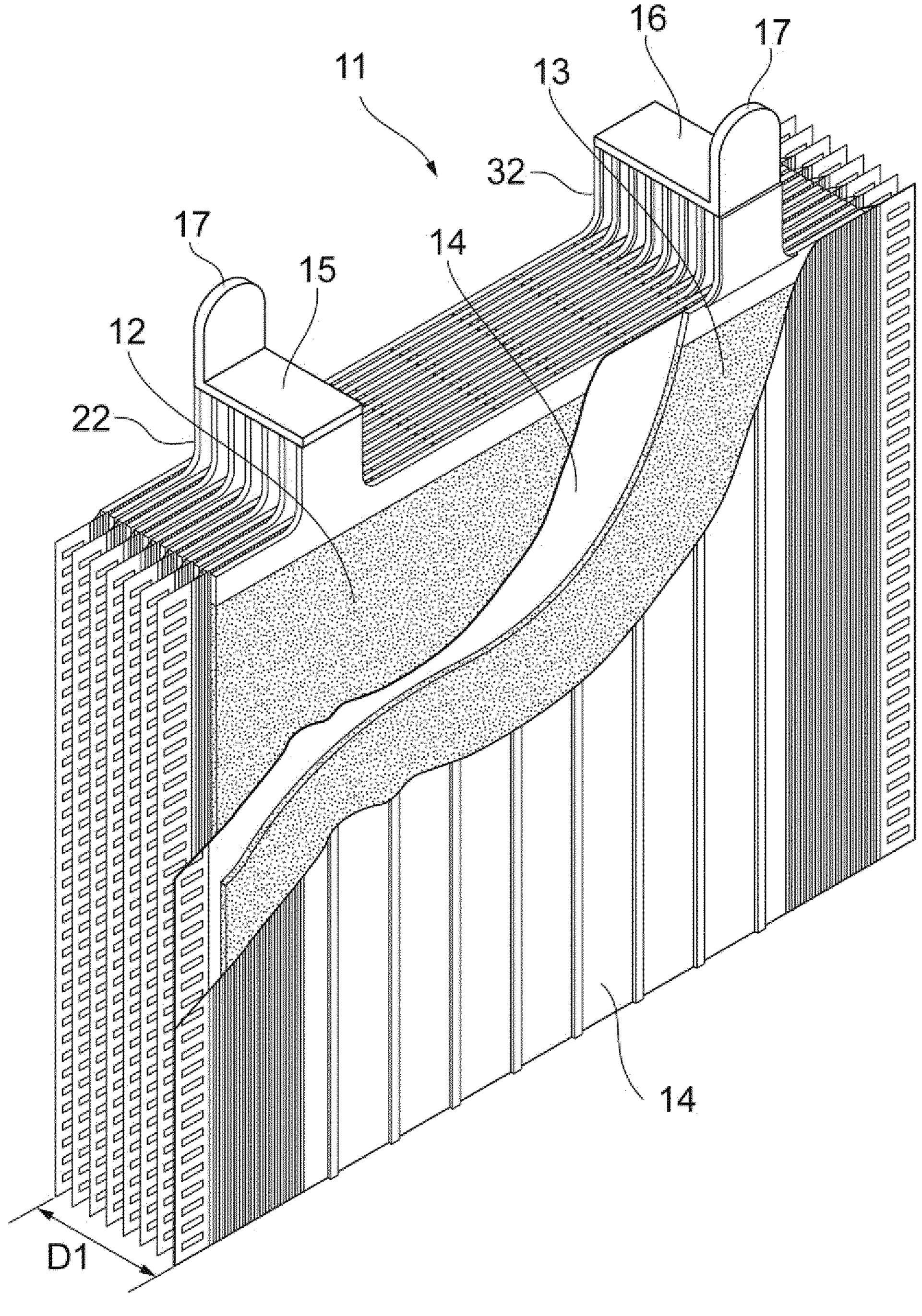

Fig.4

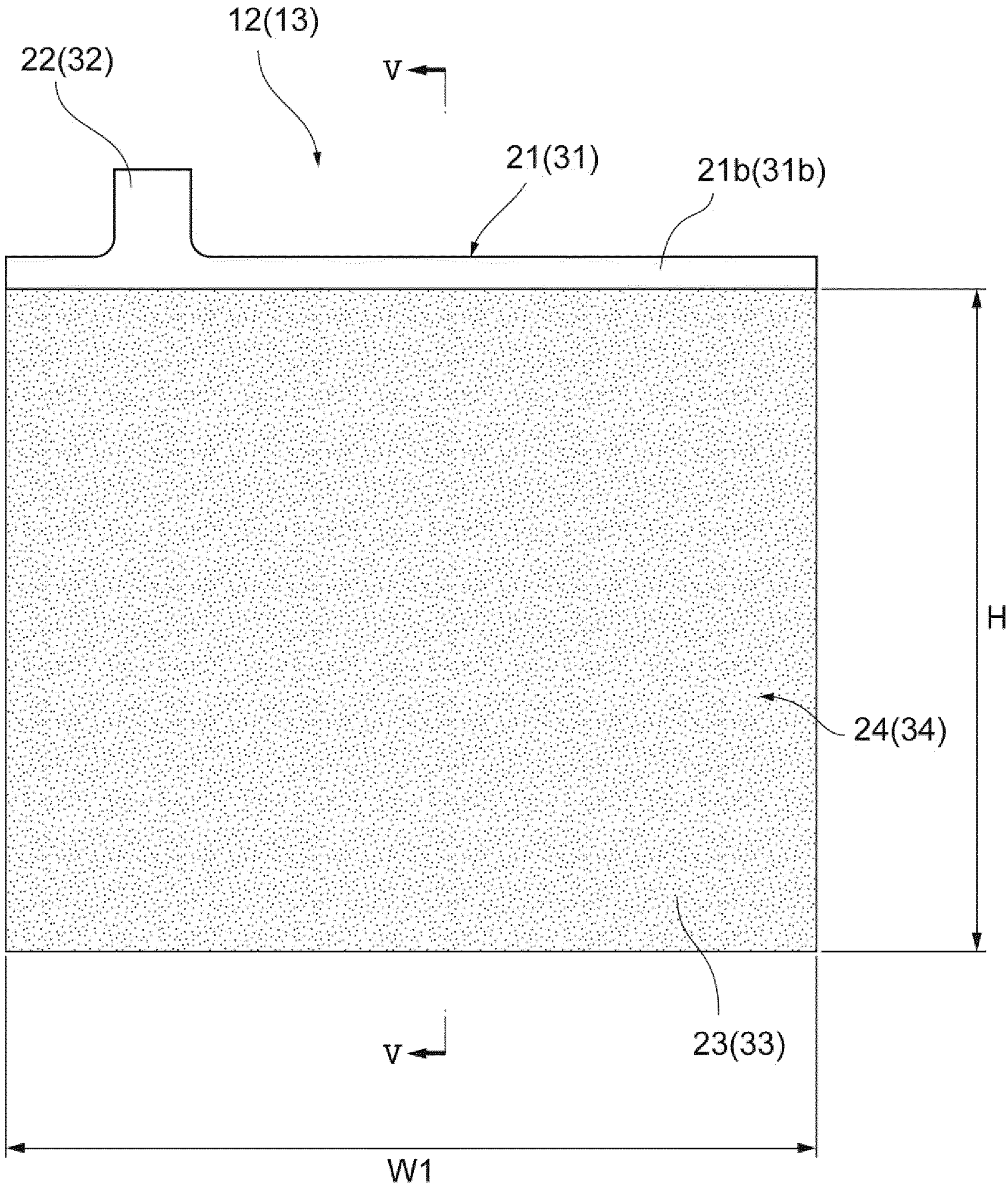

*Fig.5*

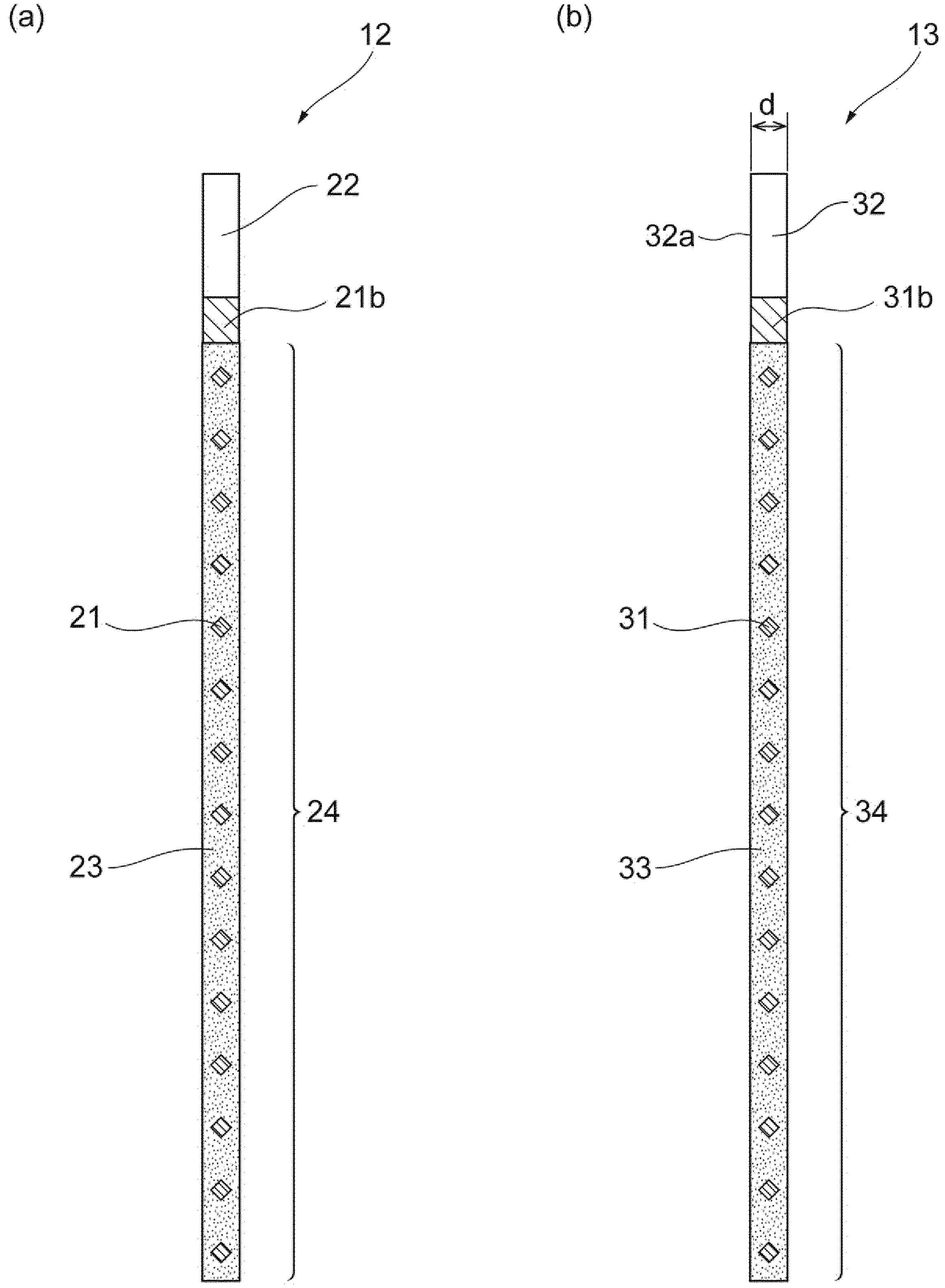

**Fig.6**

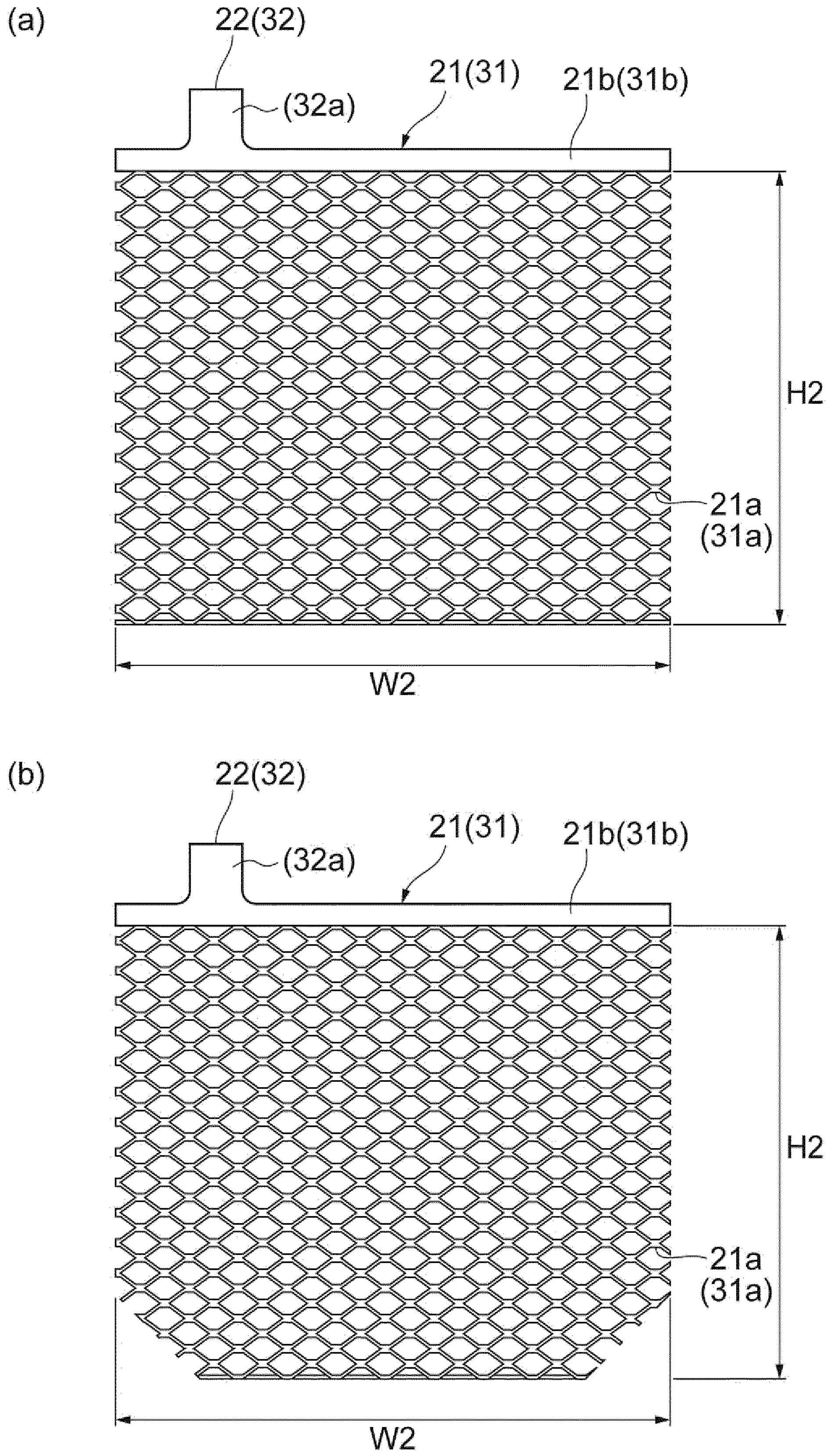
(a)
22(32)
(32a)
21(31)
21b(31b)
H2
21a
(31a)
W2
(b)
22(32)
(32a)
21(31)
21b(31b)
H2
21a
(31a)
W2

*Fig.7*

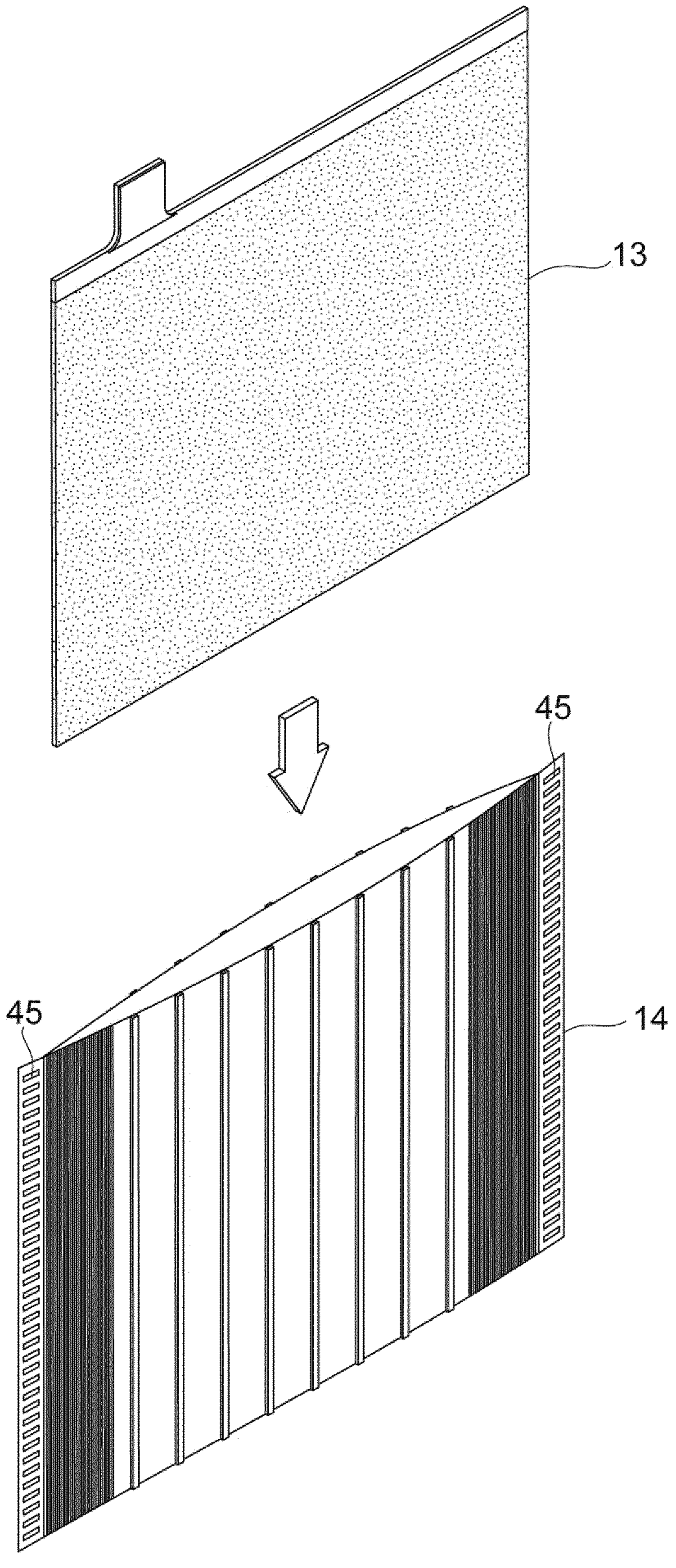

Fig.8

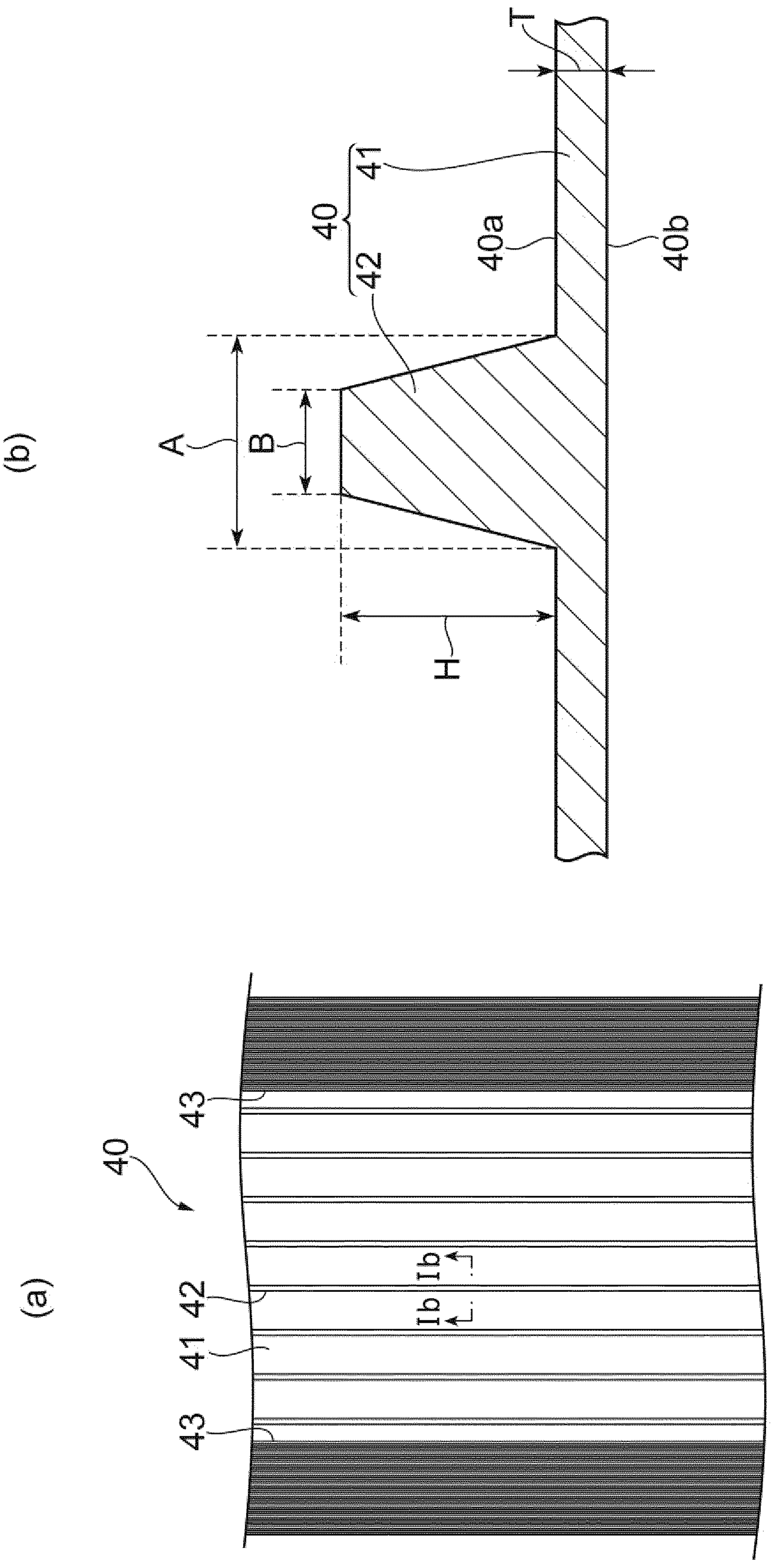

*Fig.9*

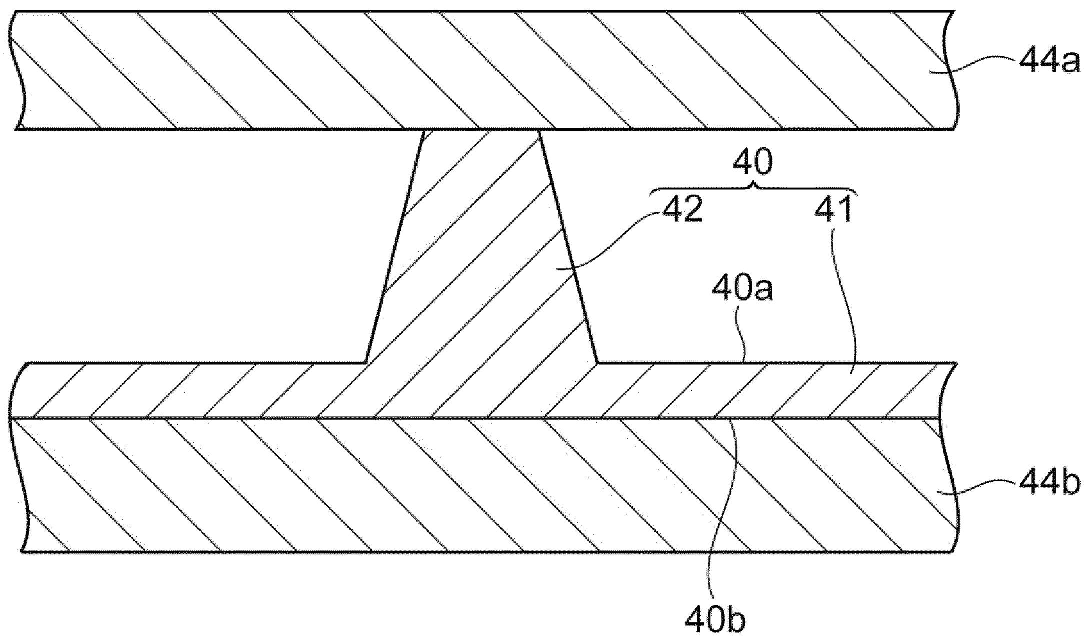

Fig.10

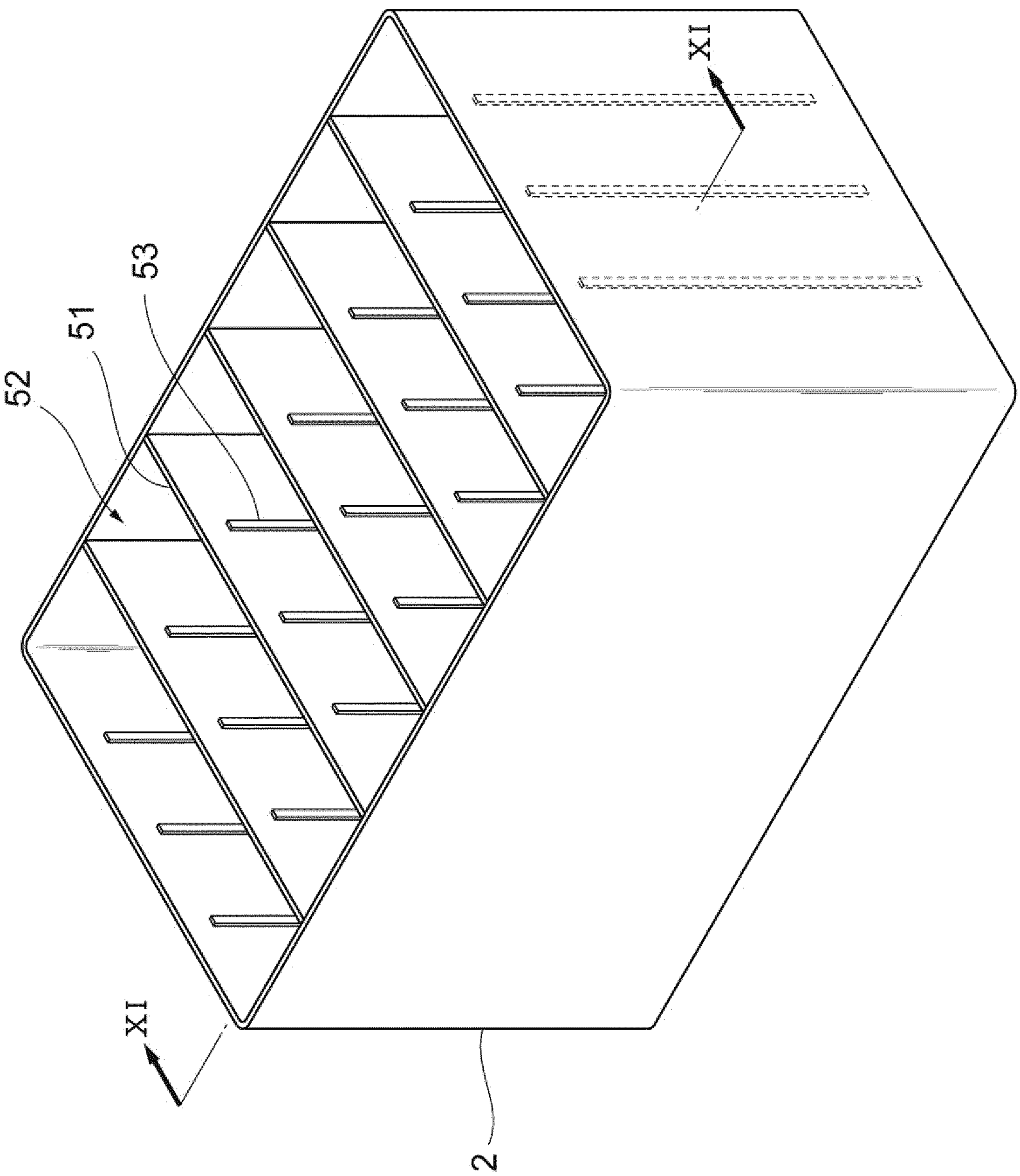

Fig.11

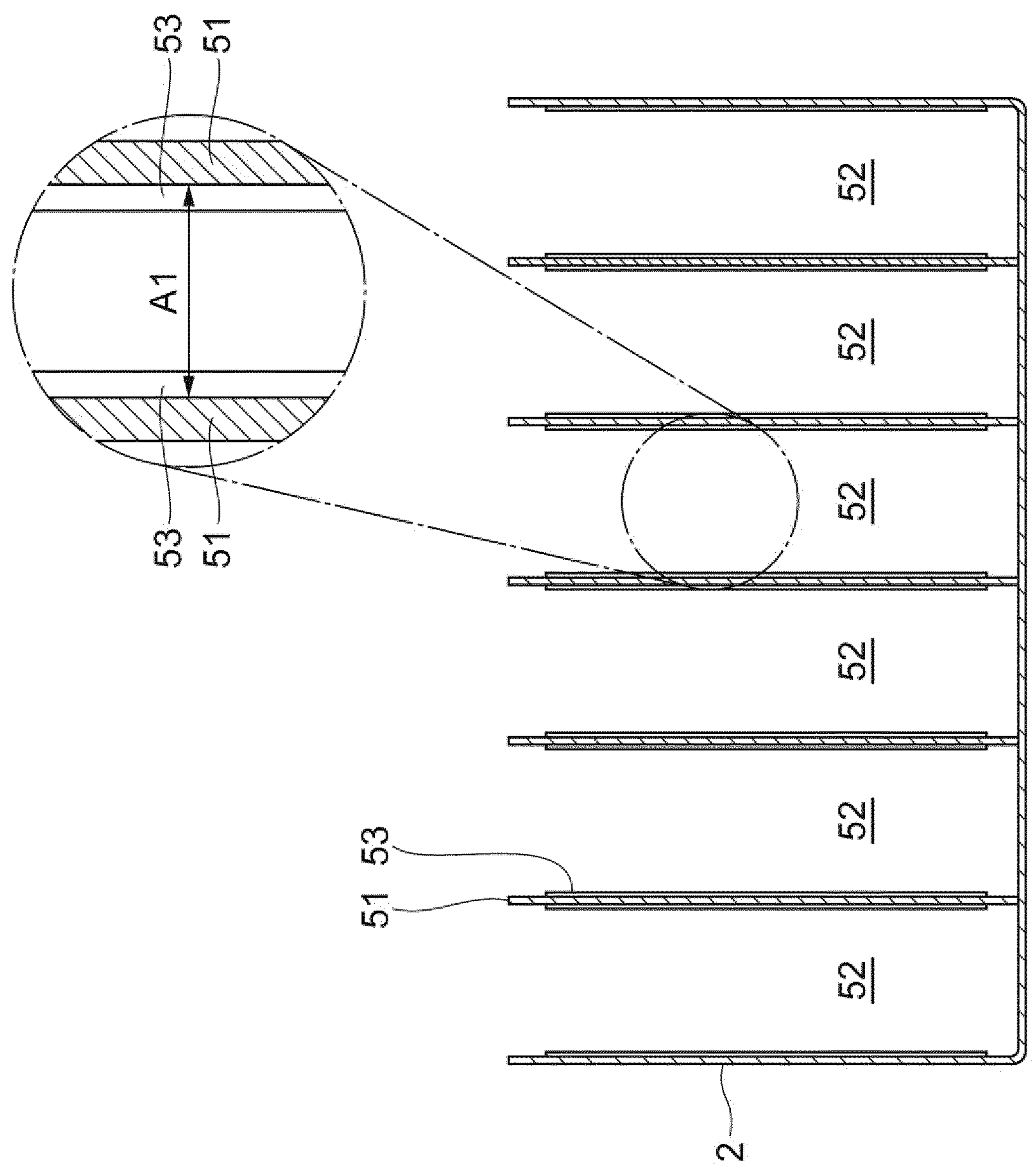

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010032782 A
- WO 2012043331 A
- EP 2280443 A